**Europäisches Patentamt**

**European Patent Office**

**Office européen des brevets**

(11) Veröffentlichungsnummer: **0 538 504 B1**

(12) **EUROPÄISCHE PATENTSCHRIFT**

(45) Veröffentlichungstag der Patentschrift: **21.12.94**

(51) Int. Cl.⁵: **B60K 23/08**

(21) Anmeldenummer: **91117925.7**

(22) Anmeldetag: **21.10.91**

(54) **Verfahren zum Steuern der Flüssigkeitsreibungskupplung eines Systems zur Verteilung der Antriebskraft eines Kraftfahrzeuges mit Allradantrieb und steuerbares Flüssigkeitsreibungskupplungssystem.**

(43) Veröffentlichungstag der Anmeldung:
**28.04.93 Patentblatt 93/17**

(45) Bekanntmachung des Hinweises auf die Patenterteilung:
**21.12.94 Patentblatt 94/51**

(84) Benannte Vertragsstaaten:
**AT BE DE ES FR GB IT SE**

(56) Entgegenhaltungen:
**EP-A- 0 332 608**
**EP-A- 0 357 074**
**DE-A- 3 935 723**

**ATZ AUTOMOBILTECHNISCHE ZEITSCHRIFT. Bd. 90, Nr. 10, 1988, STUTTGART DE Seiten 535 - 542; LANZER: 'Die Viscomatic - Ein Vierradantrieb der dritten Generation'**

(73) Patentinhaber: **STEYR-DAIMLER-PUCH AK-TIENGESELLSCHAFT**
**Franz-Josefs-Kai 51**
**A-1010 Wien (AT)**

(72) Erfinder: **Parigger, Martin, Dipl.-Ing.**

**A-8063 Eggendorf 47 (AT)**
Erfinder: **Rieger, Johann, Dipl.-Ing.**
**Schrapfberg 6**
**A-8572 Bärnbach (AT)**
Erfinder: **Müllner, Gerhard**
**Wittenbauerstrasse 75**
**A-8010 Graz (AT)**
Erfinder: **Schaffernak, Robert, Dipl.-Ing.**
**Kleinsemmering 47**
**A-8160 Weiz (AT)**
Erfinder: **Pecnik, Hermann, Ing.**

**A-8302 Nestelbach 98 (AT)**

**Beschreibung**

Die Erfindung handelt von einem Verfahren zum Steuern einer Flüssigkeitsreibungskupplung eines Systems für die Antriebskraftverteilung zwischen den Achsen eines allradangetriebenen Fahrzeuges durch Verstellen eines Stellkolbens der Flüssigkeitsreibungskupplung mittels eines ein Steuerventil enthaltenden Steuerkreises, ausgehend von fahrzustandsspezifischen Signalen. Sie handelt auch von einem Flüssigkeitsreibungskupplungssystem, das dazu geeignet ist, nach diesem Verfahren gesteuert zu werden.

Aus der EP-B-332 608 der Anmelderin ist beispielsweise ein steuerbares Flüssigkeitsreibungskupplungssystem zum Antrieb eines Kraftfahrzeuges mit zwei angetriebenen Achsen bekannt, bei dem diese Kupplung im Antriebsstrang zur Hinterachse im Zusammenwirken mit einem Planetengetriebe angeordnet ist. Die Steuerung erfolgt dort durch hydraulische Verstellung eines Stellkolbens, der die Abstände der Lamellen verändert. Wie das Steuersystem beschaffen sein und wie es arbeiten soll, ist dort nicht beschrieben.

Aus der DE-A-36 26 025 ist eine Steuereinrichtung für eine Lamellenkupplung für die hydraulisch steuerbare Zuschaltung des Vorderradantriebes eines Kraftfahrzeuges bekannt, in der aus fahrzustandsspezifischen Signalen ein Signal zur Steuerung eines Ventiles abgeleitet wird, das den Anpreßdruck der Lamellenkupplung bestimmt. Die Steuereinrichtung vergleicht lediglich die Achsdrehzahldifferenz mit einem von Geschwindigkeit und Lenkwinkel abhängigen Vergleichswert und ermittelt daraus ein Soll-Antriebsmoment für die zuschaltbare Vorderachse durch Multiplikation mit verschiedenen Koeffizienten, je nachdem, ob die Achsdrehzahldifferenz über oder unter dem Vergleichswert liegt. Dieser Sollwert wird dann durch Verstellung des Druckes im hydraulischen Steuerkreis eingeregelt.

Abgesehen davon, daß es sich hier um eine Reibungskupplung mit anderer Wirkungsweise und anderem Regelverhalten handelt, sind fahrdynamisch wesentliche Faktoren (z.B. das Motormoment) und Fahrsituationen nicht berücksichtigt. Dadurch reagiert die Steuerung nur auf den Schlupf, wobei sie ihm gewissermaßen nacheilt und dadurch relativ träge ist, sodaß weder bezüglich Traktion noch bezüglich Fahrsicherheit die Möglichkeiten variabler Antriebskraftverteilung ausgenutzt werden.

Weiters ist aus der DE-C-35 05 455 eine ähnliche Antriebsanordnung mit Lamellenkupplung bekannt. Deren Steuerung berücksichtigt zwar mehrere fahrdynamische Faktoren, darunter auch den Reifenfehler, kann jedoch die Kupplung nur entweder ganz öffnen oder ganz schließen.

Der Erfindung liegt daher die Aufgabe zugrunde, ein Regelungsverfahren zu schaffen, das unter gleichzeitiger Berücksichtigung aller fahrdynamisch wesentlichen Faktoren möglichst schnell und teilweise sogar vorauseilend eine möglichst genaue und die physikalischen Gegebenheiten wiederspiegelnde Steuerung der Antriebskraftverteilung ermöglicht.

Es ist eine weitere Aufgabe der Erfindung, ein Flüssigkeitsreibungskupplungssystem so zu gestalten, daß es für die Ausübung des Verfahrens geeignet ist.

Erfindungsgemäß besteht das Verfahren in den im kennzeichnenden Teil des ersten Anspruches aufgezählten Schritten.

Durch die Zusammenfassung von Signalerfassung und -verarbeitung stehen diese Signale in den folgenden Verfahrensschritten, in denen sie teils mehrmals verwendet werden, immer zur Verfügung und können unabhängig vom Ablauf des weiteren Verfahrens, dem Zeitverhalten der verschiedenen Sensoren und Verarbeitungsschaltungen entsprechend, auf neuestem Stand gehalten werden. Auch die Basisgrößen werden im Laufe des Verfahrens mehrmals benötigt und brauchen so nur einmal berechnet zu werden, was die Ansprechzeit der Regelung verkürzt.

Die getrennte Ermittlung einzelner Regelabweichungen (z.B. Antriebsschlupf, Schubschlupf, Querschlupf) hat den wesentlichen Vorteil, daß sämtliche fahrdynamischen Abweichungen dauernd überwacht werden, ohne daß durch eine vorgeschaltete Entscheidungslogik einzelne Störungen ignoriert werden, sodaß auch extremen Fahrzuständen Rechnung getragen werden kann. Dadurch ist es auch möglich, bei Weiterentwicklung des Verfahrens ohne wesentliche Programmänderungen weitere relevante Regelabweichungen einfach in das Verfahren aufzunehmen.

Weiters ist es vorteilhaft, daß dadurch die verschiedenen Regelabweichungen physikalisch korrekt, sehr genau und unverfälscht zur Verfügung stehen und erst möglichst spät im Verfahrensablauf nach Filterung und Gewichtung zu einer Ausgangsgröße zusammengefaßt werden.

Ein besonders wesentliches und vorteilhaftes Merkmal der Erfindung ist die Berechnung einer Soll-Kolbengeschwindigkeit aus den Regelabweichungen des vorhergehenden Schrittes. Es wird also nicht ein Soll-Druck oder eine Soll-Position des Stellkolbens ermittelt, sondern eine Größe, die bereits um eine Differenzierungsstufe höher liegt, ohne vorhergehende Differentation, die ja Abweichungen und Störungen der Grundsignale vergrößern würde. In einem groben Vergleich würde durch diese Maßnahme ein P-Regler als I-Regler wirken. Dadurch wird eine sehr genaue Einstellung der gewünschten Schlupfdifferenz und damit der Antriebskraft erreicht, praktisch ohne Regelabweichung. So wird ein sehr schnelles und praktisch verzögerungsfreies Verstellen der Drehmomentverteilung erreicht. Dieser Vorteil hat im Zusammenwirken mit einer Flüssigkeitsreibungskupplung besonderes Gewicht, weil der Verstellweg des Stellkolbens dort relativ groß ist.

Die Wahl der Kolbengeschwindigkeit als Stellgröße hat weiters den Vorteil, daß sie unmittelbar und direkt in eine Strömungsgeschwindigkeit des Hydrauliköles (und somit auch in einen Durchflußquerschnitt des Steuerventiles) umrechenbar ist und dieser wieder sehr gut mit dem zur Betätigung des Steuerventils nötigen elektrischen Strom übereinstimmt, sodaß die Ausgangsgröße der Steuerung ein elektrischer Soll-Ventilstrom ist, der im Stellglied mit sehr gutem Zeitverhalten in einem geschlossenen Regelkreis ohne Servo-Positionsregelung eingeregelt werden kann.

Besonders vorteilhaft ist auch der Umstand, daß alle Regelungsaufgaben auch ohne Kolbenpositionssignal ausgeführt werden können, wodurch die Funktion des Systems bei Sensorausfall weitgehend erhalten bleibt. Unter Umständen kann aus Kostengründen ganz auf den Kolbenpositionssensor verzichtet werden.

Es ist vorteilhaft, zur Berechnung der Zugkraft von der Motorleistungs-Stellorganstellung und der Motordrehzahl auszugehen, daraus in einem gespeicherten Kennfeld das Motormoment zu ermitteln und dann über die aus Vorderachsdrehzahl und Motordrehzahl ermittelte Getriebeübersetzung zur Zugkraft zu gelangen (Anspruch 2), anstatt die Zugkraft direkt aus Motorleistung und Fahrgeschwindigkeit zu berechnen. Dadurch eilt das Zugkraftsignal der tatsächlichen Zugkraft und damit einer Schlupfänderung etwas voraus. So ist es auch möglich, durch Manipulation der gerechneten Getriebeübersetzung besondere Sicherheitseffekte (z.B. bei Signalausfall) zu erzielen.

So kann man beispielsweise durch Begrenzen des Wertes der Übersetzung zwischen zwei gewählten Grenzwerten (Anspruch 3) ein stark schwankender und unrichtiger Übersetzungswert beim Einkuppeln und beim Anfahren vermieden werden. Durch Begrenzen des Wertes der Übersetzung zwischen zwei Grenzwerten ist gewährleistet, daß auch bei Signalausfall ein vernünftiger Übersetzungswert erhalten wird.

So kann man bei Vorderachsdrehzahlen unter einem vorgegebenen Minimalwert die Übersetzung der maximalen Übersetzung gleichsetzen (Anspruch 4) oder bei niedrigen Momenten, den oberen Grenzwert der Übersetzung niedriger als die tatsächliche Übersetzung im niedrigsten Gang wählt (Anspruch 5).

In Weiterbildung des erfindungsgemäßen Verfahrens kann als weitere Basisgröße ein Radfehler ermittelt werden, indem man zuerst in einer Initialisierungszeit die Schwankung gewisser Größen nach bestimmten Bedingungen überwacht und erst dann durch Integration über eine bestimmte Wegstrecke einen Schlupfmittelwert bildet, der dann den prozentuellen Radfehlermeßwert darstellt (Anspruch 6). Dadurch können insbesondere unterschiedliche Abrollumfänge der Fahrzeugreifen an Vorder- und Hinterachse als kinematisch bedingter Anteil des gemessenen Schlupfes erkannt und ausgeschieden werden. Durch die im Anspruch 6 angegebenen Bedingungen und die Integration über eine bestimmte Wegstrecke, wird diese Korrektur besonders genau, was angesichts der hohen Genauigkeit des gesamten Regelverfahrens von Bedeutung ist.

Die Radfederberechnung kann durch die in den Ansprüchen 7 und 8 angegebenen Maßnahme noch weiter verfeinert werden. Die Maßnahmen des Anspruches 7 stellen Plausibilitätskontrollen dar, durch die auch Verzerrungen der Radfehlerkorrektur durch Reifenschlupf vermieden werden.

Bei dem in Anspruch 8 angegebenen Mittelungsverfahren geht die kontinuierliche Mittelung der einzelnen Meßwerte nach einer Anzahl von Messungen in eine Filterung über. Dadurch wird nach Start des Fahrzeuges ein veränderter Radfehler, z. B. durch Montage eines Reserve- oder gar eines Notrades, relativ schnell aktualisiert und dann durch laufende Mittelung abgesichert, ohne den Einfluß neuer Meßwerte nach langer Fahrzeit vollständig zu unterdrücken.

In weiterer Ausgestaltung der Erfindung wird aus dem tatsächlichen Schlupf durch Abzug eines kinematisch bedingten Schlupfanteiles bei Kurvenfahrt und gegebenenfalls eines Radfehlers ein kinematisch korrigierter Schlupfwert gewonnen. Dabei wird der kinematisch bedingte Schlupfanteil bei Kurvenfahrt gespeicherten Kennfeldern entnommen (Anspruch 9).

In den Kennfeldern ist nicht nur die lenkgeometrische Beziehung, sondern auch der dynamische Schräglaufwinkel der Reifen in Abhängigkeit von Geschwindigkeit und Fahrtrichtung (vorwärts-rückwärts) berücksichtigt.

In einer vorteilhaften Weiterbildung des Verfahrens wird aus dem zeitlichen Verlauf der Zugkraft ein Dynamikfaktor berechnet, der dann wie eine Regelabweichung behandelt wird (Anspruch 10). Das verbessert das Ansprechverhalten der Regelung bei sprunghaften Änderungen des Lastzustandes, durch Beschleunigung des Stellkolbens, in Richtung hohes übertragenes Moment bei Gasstoß und in Richtung geringes übertragenes Moment bei plötzlichem Gaswegnehmen, was in der Wirkung einer Störgrößenaufschaltung gleichkommt. Der Dynamikfaktor ist ebenso wie die anderen Regelabweichungen dimensionslos, dadurch ist die Gleichbehandlung auch physikalisch gerechtfertigt. Dank diesem Dynamikfaktor reagiert die Steuerung derart schnell und sogar vorauseilend, daß verzögerungsfrei eine für Fahrverhalten und Fahrsicherheit optimale Antriebskraftverteilung zur Verfügung steht.

In einer Weiterbildung des erfindinngsgemäßen Verfahrens wird die Regelabweichung der Stellkolbenposition als Differenz aus Sollwert der Stellkolbenposition und der aktuellen Stellkolbenposition,multipliziert mit einem geeignet gewählten Regelgeschwindigkeitsfaktor, ermittelt. Dabei werden die Sollwerte der Stellkolbenposition in Abhängigkeit von Fahrgeschwindigkeit, Lenkwinkel und Zugkraft gespeicherten Kennfeldern entnommen und dann wird aus den Regelabweichungen eine Maximumauswahl getroffen (Anspruch 11). Das bewirkt eine Vorpositionierung des Stellkolbens auf eine vom jeweiligen Fahrzustand abhängige Mindestposition. So verringern sich die Stellzeiten für die Schlupfregelung, wodurch das Ansprechverhalten entscheidend verbessert und die notwendigen Kolbenbewegungen reduziert werden. Da es sich bei der Vorpositionierung um die Einregelung einer sicher zulässigen Mindestposition handelt, kann sie die Schlupfregelung im ungünstigsten Fall nicht verschlechtern.

Bei der Ermittlung der Antriebsschlupfregelabweichung wird mit Vorteil zuerst aus Zugkraft und einer fahrgeschwindigkeitsabhängigen Drehzahl ein Antriebs-Schlupfsollwert ermittelt. Dann wird durch Minimumauswahl aus einerseits der Differenz aus dem kinematisch korrigierten Schlupf und dem Antriebsschlupf-Sollwert und andererseits der Differenz aus dem Schlupf und einem geeignet gewähltem positivem Mindestschlupf die Antriebsschlupfregelabweichung gewonnen (Anspruch 12). Ziel der Antriebsschlupfregelung ist das Begrenzen von positiver Schlupfdifferenz zwischen Vorder- und Hinterachse auf einen zugkraft- und geschwindigkeitsabhängigen Sollwert. Die Ermittlung dieses Schlupfwertes aus der Zugkraft und einer fahrgeschwindigkeitsabhängigen Drehzahl gibt die Möglichkeit, diese nach fahrdynamischen und regelungstechnischen Erfordernissen vorzunehmen. Damit reagiert die Steuerung auch noch in extremen Fahrsituationen "richtig".

Die Gewinnung der Antriebsschlupf-Regelabweichung daraus durch Minimumauswahl stellt sicher, daß bei negativer Drehzahldifferenz zwischen Vorder- und Hinterachse keine positive Regelabweichung auftritt. Belästigung des Fahrers durch Reglerschwingungen und Verspannung des Antriebsstranges durch falsche Momentenflußrichtung, die sonst bei negativen kinematischen Schlupfanteilen entstehen können, werden dadurch zuverlässig vermieden.

Es ist auch vorteilhaft, eine Schubschlupfregelabweichung zu ermitteln, indem zuerst aus einer fahrgeschwindigkeitsabhängigen Drehzahl und dem Lenkwinkel ein Schub-Schlupfsollwert ermittelt und dann die Schub-Schlupfregelabweichung durch Minimumauswahl aus einerseits der Differenz aus dem Schub-Schlupfsollwert und dem kinematisch korrigierten Schlupf und aus andererseits der Differenz aus einem negativen Mindestschlupf und dem tatsächlichen Schlupf errechnet wird (Anspruch 13). Durch diese Schub-Schlupfregelung werden negative Schlupfdifferenzen im Motorbremsbetrieb abgefangen und auf einen lenkwinkel- und geschwindigkeitsabhängigen Sollwert begrenzt. Durch den Mindestsollwert können wie bei der Antriebsschlupfregelung regelungstechnische Erfordernisse berücksichtigt werden. Da bei der Bestimmung des Schub-Schlupfsollwertes die Zugkraft nicht berücksichtigt wird, ist diese Regelung auch im Antriebsfall aktiv, wodurch einerseits Einflüsse einer fehlerhaften Zugkraftermittlung ausgeschlossen werden und andererseits das Wiederanwerfen eines beim Bremsen abgewürgten Motors durch die Regelung unterstützt wird.

Weiters kann im Zuge des Verfahrens die Vorderachs-Querschlupfregelabweichung gewonnen werden, indem zuerst der Schlupf zwischen linkem und rechtem Vorderrad, dann der kinematisch korrigierte Querschlupf, dann der Querschlupf-Sollwert und schließlich daraus die Vorderachs-Querschlupfregelabweichung als Differenz aus dem kinematisch korrigierten Querschlupf und dem Querschlupf-Sollwert ermittelt werden (Anspruch 14). Eine derartige Querschlupfregelung reagiert auf übermäßiges Durchrutschen des kurveninneren Vorderrades, hauptsächlich im fahrdynamischen Grenzbereich und verhindert dort Schwingungen und Fehlreaktionen der Antriebsschlupfregelung durch stark schwankende Raddrehzahlen.

In Weiterbildung des Verfahrens kann auch noch eine Bremsregelabweichung ermittelt werden, indem zuerst eine Referenzdrehzahl als von der bei Bremsbeginn gemessenen Hinterachsdrehzahl abfallende Drehzahl gebildet und aus dieser und der Hinterachsdrehzahl dann die Bremsregelabweichung ermittelt werden (Anspruch 15). Damit wird eine optimale Umverteilung der Bremsmomente aus Motorbremsung und leichter Betriebsbremsung erzielt und so ein Überbremsen der Vorderräder durch den Motorschub verhindert. Um aber ein Überbremsen der Hinterachse durch das Antriebssystem unter allen Umständen zu vermeiden, wird die Bremsregelabweichung aus der Hinterachsdrehzahl ermittelt.

In einer besonders vorteilhaften Weiterbildung der Erfindung wird aus den diversen einzelnen Regelabweichungen die Soll-Kolbengeschwindigkeit berechnet, indem zuerst die resultierende Regelabweichung durch Maximumauswahl aus Termen, die mit Regelgeschwindigkeitsfaktoren multiplizierte Regelabweichungen bzw. analoge Größen enthalten, ermittelt und dann daraus nach einer geeignet gewählten Funktion die Soll-Kolbengeschwindigkeit berechnet (Anspruch 16). Durch geeignete Bildung und Zusammenstellung der

EP 0 538 504 B1

Termen, aus denen die Maximumauswahl zu treffen ist , werden sämtliche Regelabweichungen und analogen Größen, die sehr genau vorliegen, in einer Weise zu einem Endresultat zusammengefaßt, die sämtlichen Fahr- und Fahrbahnzuständen Rechnung trägt. Durch die Wahl der Regelgeschwindigkeitsfaktoren wird die Regelgeschwindigkeit den Änderungen der Regelstrecke in Abhängigkeit vom Fahrzustand angepaßt.

In Verfeinerung kann vorgesehen sein, daß bei betätigten Bremsen die Regelabweichung durch Minimumauswahl aus der Brems-Schlupfregelabweichung oder der Schubschlupfregelabweichung, jeweils multipliziert mit einem Regelgeschwindigkeitsfaktor, erfolgt (Anspruch 17). Dadurch können auch beim Bremsen die Vorteile des Allradantriebes voll genutzt werden, ohne die Bremsstabilität und ABS-Tauglichkeit zu schmälern.

Eine weitere Verbesserung der Regelgüte wird dadurch erreicht, daß die diversen Regelabweichungen vor der Bildung der resultierenden Regelabweichung einzeln gefiltert werden (Anspruch 18). Der Hauptteil der für ein ruhiges Regelverhalten notwendigen Filterung wird also nicht an den Eingangssignalen, sondern erst an den Regelabweichungen vorgenommen, da hier durch eine spezielle Logik im Hinblick auf eine Minimierung der Stellkolbenbewegung gefiltert werden kann.

Das erfindungsgemäße Flüssigkeitsreibungskupplungssystem weist ein Steuergerät auf, das über Mittel zur Berechnung einer Sollgeschwindigkeit des Steuerkolbens aus fahrzustandsspezifischen Signalen verfügt und als Steuerventil ein Proportionalventil, das direkt die Geschwindigkeit des Steuerkolbens aus dem berechneten Sollwert einstellt (Anspruch 19). Damit wird erreicht, daß das ganze Flüssigkeitsreibungskupplungssystem in sämtlichen Fahrzuständen extrem schnell und genau reagiert und so hohen Fahrkomfort mit größter Fahrsicherheit - auch in Extremsituationen - verbindet.

Schließlich ist das Steuergerät ein Mikrorechner, in dessen Speicher die Befehle zur Ausführung des gesamten Verfahrens enthalten sind (Anspruch 20). In einem solchen kommen die Vorteile des Verfahrens besonders gut zur Geltung und das Verfahren kann schnell und mit, gemessen an seiner gründlichen und umfassenden Wirkung, relativ geringem Aufwand ausgeführt werden.

Im folgenden wird die Erfindung anhand von Darstellungen eines Ausführungsbeispieles erläutert.

Figur 1:     Schematische Darstellung eines allradangetriebenen Fahrzeuges mit dem erfindungsgemäßen Flüssigkeitsreibungskupplungssystem, das sich beispielsweise zur Ausführung des erfindungsgemäßen Verfahrens eignet.

Figur 2:     Schematische Darstellung eines Steuergerätes zur Ausführung des Verfahrens.

Figur 3:     Ablaufschaubild des erfindungsgemäßen Verfahrens.

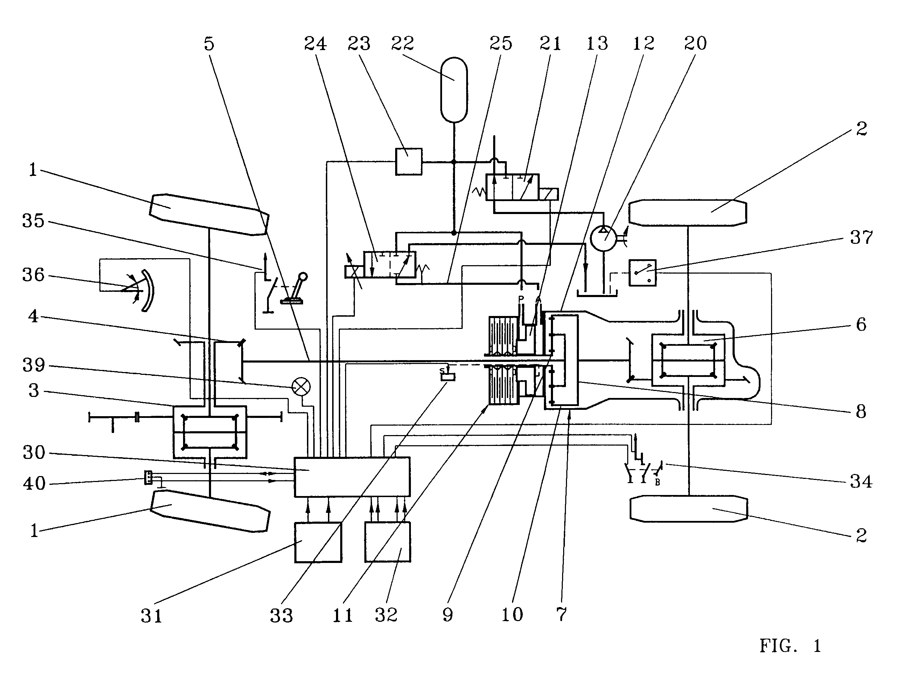

In dem in Figur 1 schematisch dargestellten allradangetriebenen Fahrzeug sind die Vorderräder mit 1 und die Hinterräder mit 2 bezeichnet. Der Antrieb erfolgt von einer nicht dargestellten Motorgetriebeeinheit auf den Korb 3 eines Vorderachsdifferentials und auf ein Winkelgetriebe 4, von dem ein Antriebsstrang 5 zum Antrieb eines Hinterachsdifferentiales 6 führt. In diesem Antriebsstrang 5 ist vor dem Hinterachsdifferential 6 ein Planetengetriebe 7, das über den Planetenträger 8 angetrieben wird, dessen Sonne 9 mit einer steuerbaren Flüssigkeitsreibungskupplung 11 verbunden ist, und dessen Hohlrad 10 den Abtrieb darstellt. Die Anordnung könnte aber auch so getroffen sein, daß das Planetengetriebe 7 anders verbunden oder ganz weggelassen ist, sodaß der Antrieb direkt über die Flüssigkeitsreibungskupplung erfolgt, oder die Flüssigkeitsreibungskupplung 11 und gegebenenfalls auch das Planetengetriebe 7 könnten bei permanentem Hinterradantrieb in einem Antriebsstrang zur Vorderachse untergebracht sein.

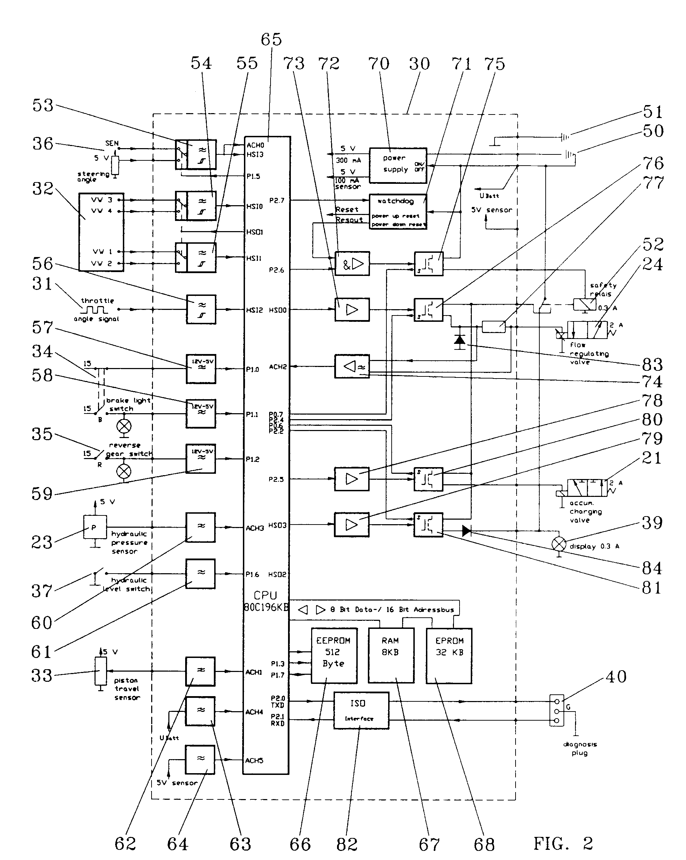

Zur Steuerung weist die Flüssigkeitsreibungskupplung 11 einen in einem Gehäuse 12 beweglichen Stellkolben 13 auf, der über eine Öldruckleitung 25 beaufschlagt wird. Dazu ist eine Ölpumpe 20 vorgesehen, die über ein Ladeventil 21 in einen Druckölbehälter 22 fördert, in dem der Druck durch die Wirkung des Ladeventils 21 und eines Drucksensors 23 konstant gehalten wird. Dieser Druckölbehälter 22 steht über das Stromsteuerventil 24 mit der Leitung 25 und damit mit der Flüssigkeitsreibungskupplung 11 in Verbindung. Das Ventil 24 wird von einem Steuergerät 30, das in Figur 2 näher dargestellt ist, gesteuert. Dieses Steuergerät 30 erhält von folgenden Stellen Eingangssignale:

- von dem Motorsteuergerät 31 ein Motorleistungsstellorganstellungssignal ATR und ein Drehzahlsignal SEN,
- vom ABS-Gerät 32 die Raddrehzahlsignale VFL,VFR,VRL,VRR,
- von einem Stellkolbenwegsensor 33 ein Stellkolben-Positionssignal PVP,
- vom Bremslichtschalter 34 ein Bremssignal BR__ON,
- von einem Sensor 35 am Schalthebel ein Retourgangsignal REV__ON,
- von einem Lenkwinkelsensor 36 ein Lenkwinkelsignal AST,
- von dem Hydraulikdrucksensor 23 das Hydraulikdrucksignal PHY,
- von einem Ölstandsmesser 37 ein Ölstandssignal.

Schließlich ist ausgangsseitig noch ein Diagnoseanschluß 40 und eine Warnlampe 39 mit dem Steuergerät 30 in Verbindung. Die Ausgangssignale des Steuergerätes 30 sind das Steuersignal ACV_ON für das Ladeventil 21 und das Steuersignal CCV für das Stromsteuerventil 24, das die Bewegung des Stellkolbens 13 der Flüssigkeitsreibungskupplung 11 steuert.

Figur 2 zeigt ein Schema des Steuergerätes 30. Aus Gründen der Übersichtlichkeit sind die oben genannten Signalquellen auf der linken Bildseite dargestellt. Die Signale werden zur Konditionierung über die Multiplexer 53,54,55, und über die Signalwandler 56 bis 64 dem Mikrocontroller 65 zugeführt, der mit einem Arbeitsspeicher 67, einem Programmspeicher 68 und auch noch mit einem Fehlerspeicher 66 in Verbindung steht.

Im Bild auf der rechten Seite des CPU sind von oben nach unten dargestellt: eine Spannungsquelle 50, die über ein Stromversorgungsgerät 70 elektrische Energie zuführt; ein Massekontakt 51; eine Watchdog-Einheit 71, die beim Auftreten von Störungen den Mikrocontroller zurücksetzt und über die Verstärkerschaltung 72 und Leistungstransistor 75 auf das Sicherheitsrelais 52 wirkt; ein Operationsverstärker 73, der über den Leistungstransistor 76 auf das Stromregelventil 24 wirkt, wobei eine Freilaufdiode 83 den kontinuierlichen Stromfluß im Stromregelventil 24 während der AUS-Phase des Leistungstransistors gewährleistet; ein Shuntwiderstand 77 und Operationsverstärker 74 mit Integrationsglied zur Mittelwertbildung, um wegen der digitalen Ansteuerung für ein stabiles Rückführsignal zu sorgen; Operationsverstärker 78,79, die über Leistungstransistoren 80,81 auf das Ladeventil 21 bzw. die Kontrollampe 39 wirken. Schließlich ist noch ein Interface 82 zum Anschluß eines Diagnosesteckers 40 vorgesehen.

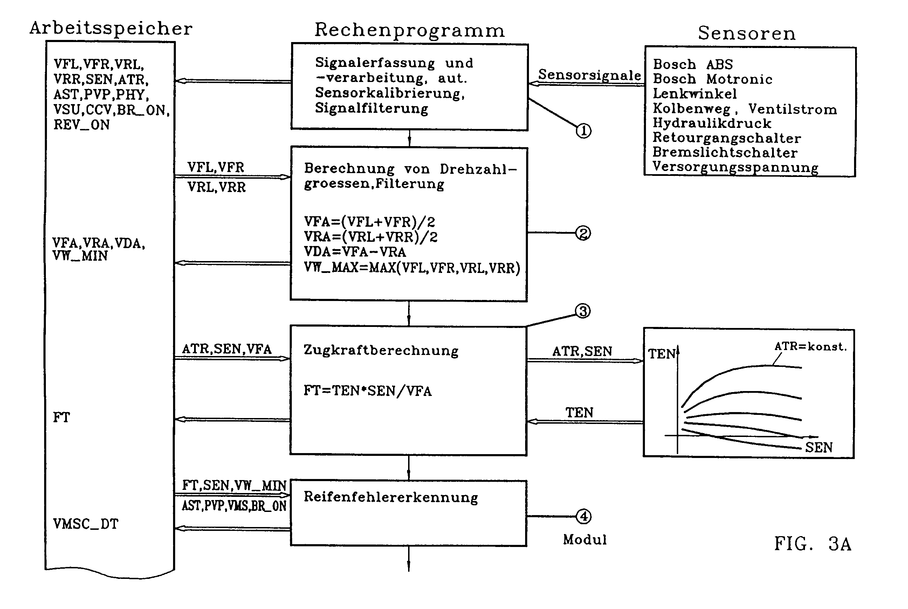

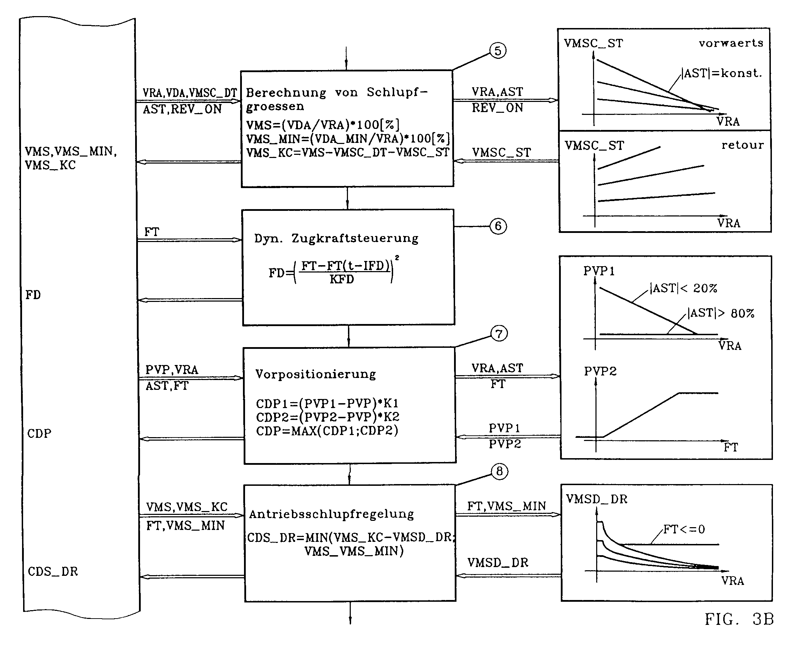

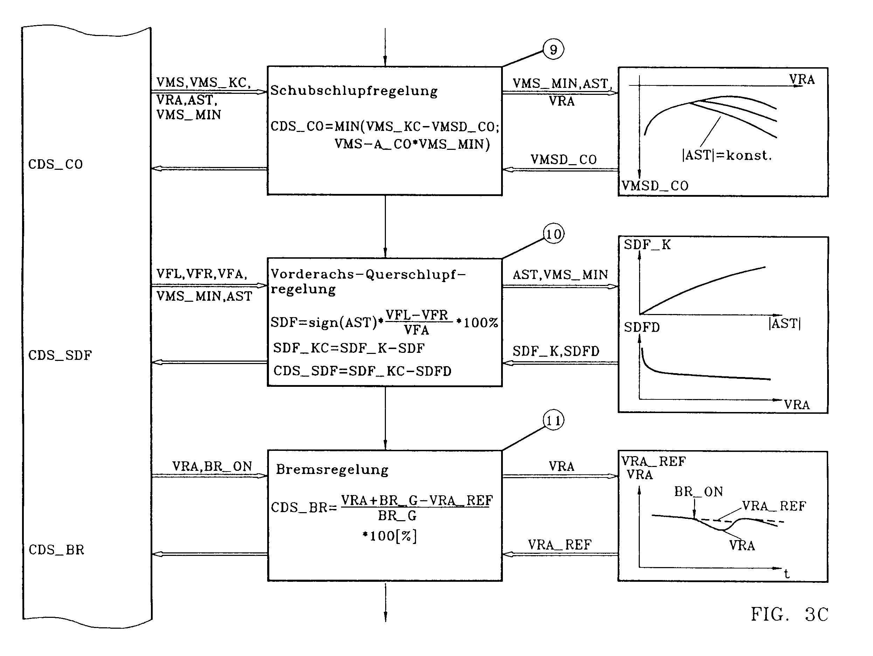

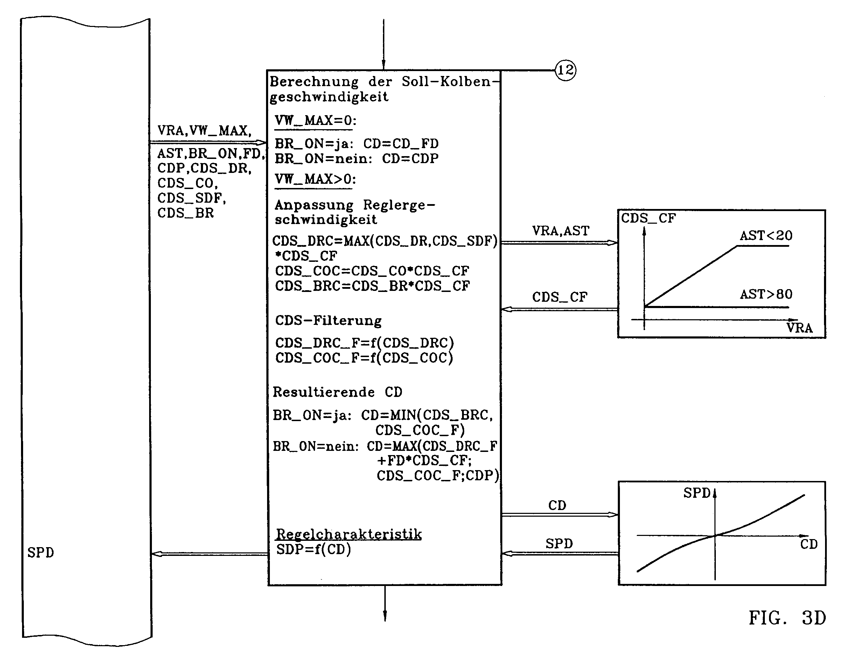

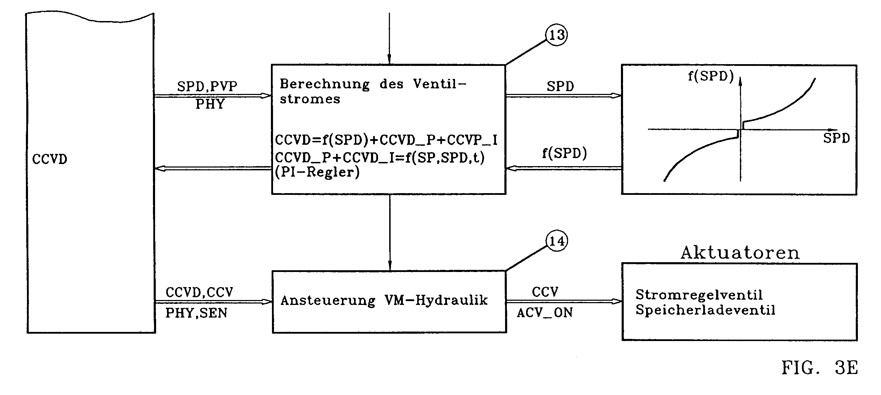

Nun wird anhand der Figur 3, die sich in geschlossener Reihe über die Blätter 3A bis 3E erstreckt, ein Ausführungsbeispiel des erfindungsgemäßen Steuerverfahren beschrieben, wobei der auf der linken Bildseite über alle Blätter durchlaufende vertikale Balken den Arbeitsspeicher 67 darstellt und die darin eingetragenen Signale die jeweils eingegangenen Signale sind, die dort stehenbleiben, bis sie aktualisiert werden.

Die Blöcke, die rechts an den Arbeitsspeicher anschließen und mit diesem durch horizontale Pfeile in doppelter Linie verbunden sind, sind Gruppen zusammengehöriger Schritte des im Programmspeicher 68 enthaltenen Rechenprogrammes zur Lösung einer bestimmten Teilaufgabe, die im folgenden als Moduln bezeichnet und durchlaufend von 1 bis 14 numeriert sind (Nummern in Figur 3 eingekreist).

Die Blöcke auf der rechten Bildseite, die durch horizontale Pfeile in doppelter Linie mit den einzelnen Moduln verbunden sind, versinnbildlichen die Zufuhr von Daten, entweder von Sensoren oder aus gespeicherten Kennlinien bzw. Kennlinienfeldern. Dabei sind hier wie dort über den horizontalen Pfeilen die Signalbewegungen angegeben. In den einzelnen Modul-Kästchen sind die dort durchgeführten wesentlichen Operationen durch Gleichungen symbolisiert.

## 1. Signalerfassung und -verarbeitung (Modul 1)

In diesem Programmteil werden aus den anliegenden Sensorsignalen die für die Steuerung notwendigen Eingangsgrößen in physikalischen Einheiten berechnet. Das sind:

| | | |
|---|---|---|
| - VFL, VFR, VRL, VRR | Raddrehzahlen | [UpM] |
| - SEN | Motordrehzahl | [UpM] |
| - ATR | Drosselklappenstellung | [%] |
| - AST | Lenkradwinkel | [%] |
| - PVP | Kolbenposition | [%] |
| - PHY | Hydraulik-Systemdruck | [bar] |
| - CCV | Ventilstrom | [mA] |
| - VSU | Versorgungsspannung | [V] |
| - BR_ON | Bremssignal | [-] |
| - REV_ON | Retourgangsignal | [-] |

Die Berechnung erfolgt jedoch nicht, wie in allen folgenden Moduln, in der durch das Programm vorgegebenen Reihenfolge, sondern je nach Anfall, der vom Zeitverhalten der jeweiligen Sensoren und Signalwandler abhängt.

EP 0 538 504 B1

## 2. Berechnung von Basisgrößen für die Regelung (Modul 2,3,4,5)

Modul 2: Berechnung von Drehzahlgrößen,Filterung

Modul 2 dient der Berechnung nicht direkt gemessener Drehzahlgrößen, die in mehreren nachfolgenden Moduln benötigt werden.

VFA = (VFL + VFR)/2      Vorderachsdrehzahl
VRA = (VRL + VRR)/2      Hinterachsdrehzahl
VDA = VFA - VRA      Drehzahldifferenz VA/HA
VW__MAX      Größte Raddrehzahl

Wie bei den Eingangssignalen kann auch hier eine zusätzliche Filterung von VFA, VRA und VDA einprogrammiert sein.

Modul 3: Zugkraftberechnung

In Modul 3 wird aus Drosselklappenstellung ATR, Motordrehzahl SEN und Vorderachsdrehzahl VFA (bei permanentem Hinterradantrieb aus VRA) die vorhandene Motorzugkraft FT wie folgt berechnet.

Motormoment TEN:

TEN = f(ATR, SEN)      Interpolation aus gespeichertem Kennfeld

Getriebeübersetzung MT:

VFA < 100 UpM: MT = MT__MAX
VFA > 100 UpM: MT = SEN/VFA
MT > MT__MAX: MT = MT__MAX
MT < MT__MIN: MT = MT__MIN
MT__MAX = 11 (1.Gang)
MT__MIN = 2.8 (5.Gang)

Unterhalb 100 UpM Vorderachsdrehzahl, was einer Fahrgeschwindigkeit von rund 10 km/h entspricht, wird MT = MT__MAX gesetzt, da in diesem Bereich sehr starke Drehzahlschwankungen auftreten. Die allgemeine Begrenzung von MT mit MT__MAX und MT__MIN stellt bei Ausfall der Signale für Motordrehzahl (dann würde die Rechnung ja MT = 0 ergeben) oder Vorderachsdrehzahlen (dann wäre das berechnete MT unendlich) den Notlauf sicher.

Zugkraft FT:

FT = MT*TEN/R

R      Reifenradius

Modul 4: Radfehlererkennung

Die in Modul 4 durchgeführte Rad- oder Reifenfehlererkennung dient dazu, unterschiedliche Abrollumfänge der Fahrzeugreifen an Vorder- und Hinterachse als kinematisch bedingten Anteil des gemessenen Kupplungsschlupfes zu erkennen und diesen Wert zwecks Ermittlung der wirklichen Schlupfdifferenz in Modul 5 zur Verfügung zu stellen.
Unterschiedliche Abrollumfänge können hervorgerufen werden durch:
- Unterschiedliche Reifenabnützung
- Unterschiedlicher Reifendruck
- Montage eines Notrades

7

- Versehentliche Montage versch. Reifen
- Reifentoleranzen etc.

Der Algorithmus zur Ermittlung des Reifenfehlers gliedert sich in zwei Teile:

1. Feststellen eines Fahrzustandes, bei dem die gemessene Schlupfdifferenz dem Reifenfehler entspricht oder einen Hinweis auf diesen erlaubt.
2. Geeignete Ermittlung des Reifenfehlers solange dieser Fahrzustand vorliegt.

Ad 1

Der geeignete Fahrzustand wird durch folgende Signalverläufe charakterisiert:

- Schwankung des Kupplungsschlupfes VMS < einem Grenzwert
- Schwankung der Zugkraft FT < einem Grenzwert
- Schwankung der Motordrehzahl SEN < einem Grenzwert
- Fahrgeschwindigkeit > einem Grenzwert
- Lenkwinkel AST < einem Grenzwert
- Motordrehzahl SEN < einem Grenzwert
- Stellkolbenposition PVP < einem Grenzwert
- Bremse nicht betätigt,

wobei die Grenzwerte geeignet gewählt sind.

Die Bedingung für die Stellkolbenposition bedeutet, daß die Achsen weitgehend entkoppelt sein müssen, da die Verspannung des Triebwerkes sonst das Messresultat verfälschen würde. Liegt die so definierte Signalkonfiguration permanent, jedoch mindestens seit einer Initialisierungszeit vor, so wird mit der Ermittlung des Reifenfehlers begonnen.

Ad 2:

Der momentan vorliegende Schlupfwert VMS eignet sich aufgrund von Drehzahlschwankungen schlecht für die Radfehlererkennung.

Deshalb wird ein Schlupfmittelwert VMSC__DTM über eine definierte Wegstrecke (z.B. 20 m) gebildet:

$\Sigma$VRA*dt > dieser definierten Wegstrecke: VMSC__DTM = $\Sigma$VDA*dt/$\Sigma$VRA*dt

Neustart Integration: $\Sigma$VRA*dt = 0; $\Sigma$VDA*dt = 0

Damit ergibt sich z.B. alle 20 m ein neuer Schlupfmittelwert,

der folgende Zusatzbedingungen erfüllen muß, um als Radfehlermeßwert akzeptiert zu werden:

VMSC__DTM < VMSC__DT für FT > FT__DTN seit Meßbeginn oder

VMSC__DTM > VMSC__DT für FT < FT__DTP seit Meßbeginn

Durch diese beiden Bedingungen wird folgendes erreicht:

Liegt während der gesamten Mittelungszeit nur eine geringe Zugkraft zwischen FT__DTN und FT__DTP vor (praktisch lastfreies Rollen), so wird der Schlupfmittelwert ohne weitere Bedingungen als Radfehlermeßwert akzeptiert.

Ist die Zugkraft größer als FT__DTP, so kann angenommen werden, daß nur positive Reifenschlupfdifferenz auftritt. Ist deshalb der Schlupfmittelwert kleiner als der aktuelle Radfehler, so wird er als Meßwert akzeptiert.

Ist die Zugkraft kleiner als FT__DTN, so kann angenommen werden, daß nur negative Reifenschlupfdifferenz auftritt. Ist deshalb der Schlupfmittelwert größer als der aktuelle Radfehler, so wird er als Meßwert akzeptiert.

Der aktuelle Radfehler VMSC__DT wird durch Mittelung einer begrenzten Anzahl einzelner Meßwerte gebildet:

VMSC__DT = VMSC__DT + (1/I + 1)*(VMSC__DTM - VMSC__DT)

I > Imax:      I = Imax, wobei

I                Anzahl der Messungen seit Fahrzeugstart

Durch die Begrenzung von I mit Imax geht die kontinuierliche Mittelung nach Imax Meßwerten über in eine Filterung mit der Filterkonstante 1/Imax + 1; damit wird nach Fahrzeugstart ein veränderter Reifenfehler (z.B. Montage Notrad) relativ schnell aktualisiert und durch laufende Mittelung abgesichert, ohne den Einfluß neuer Meßwerte nach langer Fahrtzeit vollständig zu unterdrücken.

EP 0 538 504 B1

Modul 5: Berechnung von Schlupfgrößen

Schlupf zwischen Vorder- und Hinterachse:

VMS = (VDA/VRA)*100

Kinematisch korrigierte Reifenschlupfdifferenz zwischen Vorder- und Hinterachse:

VMS__KC = VMS - VMSC__DT - VMSC__ST

dabei sind
    VMSC__DT:    Durch unterschiedliche Reifendurchmesser bedingter Schlupfanteil, ermittelt in Modul 4.
    VMSC__ST:    Kinematisch bedingter Schlupfanteil bei Kurvenfahrt, ermittelt aus gespeicherten Kennfeldern (in denen auch der Schräglaufwinkel berücksichtigt sein kann) für Rückwärts- und Vorwärtsfahrt als Funktion von Lenkwinkel und Hinterachsdrehzahl.

Mindestschlupfdifferenz:

VMS__MIN = (VDA__MIN/VRA)*100, wobei

VDA__MIN =      konstant
VMS__MIN dient einerseits als Basis für folgende Berechnung der Schlupfsollwerte VMSD und stellt andererseits das absolute Minimum bezüglich VMS für alle Schlupfregelvorgänge dar, um eine sinngemäß richtige Momentenflußrichtung zu gewährleisten.

## 3. Regelung (Modul 6, 7, 8, 9, 10, 11, 12)

Dieser Programmabschnitt enthält die fahrdynamisch relevanten Teile der Steuerungssoftware. Die Moduln 6 bis 11 liefern die Regelabweichungen der einzelnen Teilstrategien; im Modul 12 wird daraus als resultierende Steuergröße eine Stellkolbensollgeschwindigkeit (SDP) für die Kupplung berechnet.

Modul 6: Dynamische Zugkraftsteuerung

Im diesem Modul wird aus dem Verlauf der Zugkraft FT eine Steuergröße FD berechnet, mittels der das Ansprechverhalten der Regelung bei sprunghaften Änderungen des Lastzustandes (Gasstoß, Gaswegnehmen) verbessert wird.

FD = ((FT(t) - FT(t-IFD))/KFD)$^2$ "Dynamikfaktor", wobei

IFD =      Zeitkonstante
KFD =      Konstante
Es besteht die Möglichkeit, IFD und KFD für Gasstoß und Lastwechsel verschieden vorzugeben. Der Dynamikfaktor wird im Folgenden analog einer Regelabweichung behandelt. Dadurch wird eine Beschleunigung der Kolbenbewegung in Richtung "hart" bei Gasstoß bzw. in Richtung "weich" bei Gaswegnehmen erreicht.

Modul 7: Vorpositionierung

Durch die Vorpositionierung wird der Stellkolben auf eine vom vorliegenden Fahrzustand abhängige Mindestposition eingeregelt. Damit verringern sich die Stellzeiten für die Schlupfregelung. Sie vollzieht sich in drei Stadien:
    a) Zugkraftabhängige Vorpositionierung:

CDP1 = (PVP1 - PVP)*K1 Regelabweichung

    PVP1 = f(FT)    Sollwert der Position des Stellkolbens (aus Tabelle)
    K1           Regelgeschwindigkeitsfaktor

9

b) Lenkwinkel- und geschwindigkeitsabhängige Vorpositionierung:

CDP2 = (PVP2 - PVP)*K2 Regelabweichung

PVP2 = f(AST,VRA)     Sollwert der Position des Stell kolbens
K2 =                  Regelgeschwindigkeitsfaktor
c) Resultierende Regelabweichung:

CDP = MAX(CDP1, CDP2)

Grundsätzlich wird damit der Stellkolben auf den größeren der beiden Sollwerte eingeregelt, wobei allerdings für CDP1 und CDP2 unterschiedliche Reglergeschwindigkeiten verwendet werden.

Modul 8: Antriebsschlupfregelung

Ziel der Antriebsschlupfregelung ist das Begrenzen von positiver Reifenschlupfdifferenz zwischen Vorder- und Hinterachse auf einen zugkraft- und geschwindigkeitsabhängigen Sollwert. Zwei Rechenstadien:
a) Schlupfsollwert:
Der Antriebs-Schlupfsollwert VMSD__DR wird aus Zugkraft FT und Mindestschlupf VMS__MI nach folgender Funktion errechnet:

FT > 0:VMSD__DR = VMS__GDR + VMS__MI * A__DR / (FT + B__DR)
FT < 0: VMSD__DR = MAX (VMS__GDR + VMS__MI * A__DR / B__DR ; VMSD__DRMA)

dabei sind:
VMS__GDR
A__DR
B__DR
VMSD__DRMA geeignet gewählte Konstanten
Die Wahl dieser Funktion erfolgt nach fahrdynamischen und regelungstechnischen Erfordernissen: Die Antriebsschlupfregelung bei FT < 0 gewährleistet volles Traktionsvermögen des Fahrzeuges auch bei falsch erkanntem Lastzustand (kalter Motor, Sensorausfall), wobei negative Einflüsse auf andere Regelungselemente durch die spezielle Sollwertfunktion vermieden werden.
Durch Manipulation der Lenkwinkelkorrektur (Modul 5) besteht zusätzlich die Möglichkeit, indirekt eine Lenkwinkelabhängigkeit des Schlupfsollwertes zu erreichen.
b) Regelabweichung:
Die Regelabweichung als Differenz zwischen Ist- und Sollwert wird nach folgender Funktion berechnet:

CDS__DR = MIN (VMS__KC - VMSD__DR ; VMS - VMS__MI)

Durch die zusätzliche Berechnung einer Regelabweichung aus VMS und VMS__MI und Auswahl der kleineren für CDS__DR wird grundsätzlich ausgeschlossen, daß bei negativer VC-Drehzahl eine positive Regelabweichung auftritt. Fehlreaktionen wie Reglerschwingungen und Verspannung des Antriebsstranges, die sonst bei negativen kinematischen Schlupfanteilen entstehen können, werden dadurch zuverlässig vermieden.

Modul 9: Schubschlupfregelung

Ziel der Schubschlupfregelung ist das Begrenzen von negativer Reifenschlupfdifferenz zwischen Vorder- und Hinterachse auf einen lenkwinkel- und geschwindigkeitsabhängigen Sollwert. Sie besteht auch wieder aus zwei Rechenstadien:
a) Schlupfsollwert:
Der Schub-Schlupfsollwert VMSD__CO (Viscomatic Slip Desired Coast) wird als Funktion von Lenkwinkel AST und Hinterachsdrehzahl VRA einem gespeicherten Kennfeld entnommen:

VMSD__CO = (F(AST,VRA);

F(AST,VRA) ist eine in Tabellenform gespeicherte Funktion, welche die aus fahrdynamischer Sicht (Kurvenverhalten bei unterschiedlichen Fahrbahnzuständen) optimalen Schubschlupf-Sollwerte enthält.

Die Schubschlupfregelung ist auch im Antriebsfall aktiv, wodurch einerseits Einflüsse einer fehlerhaften Zugkraftermittlung ausgeschlossen werden, andererseits das Wiederanwerfen eines beispielsweise durch ein Bremsmanöver abgewürgten Motors durch die Regelung unterstützt wird.

b) Regelabweichung:

Die Regelabweichung als Differenz zwischen Ist- und Sollwert wird nach folgender Funktion berechnet:

$$CDS\_CO = MIN (VMSD\_CO - VMS\_KC ; VMS\_MI * A\_CO - VMS)$$

Durch die zusätzliche Berechnung einer Regelabweichung aus VMS und VMS_MI * A_CO und Auswahl der kleineren für CDS_CO wird grundsätzlich ausgeschlossen, daß bei positiver VC-Drehzahl eine positive Schubschlupf-Regelabweichung auftritt. Fehlreaktionen wie Reglerschwingungen und Verspannung des Antriebsstranges, die sonst bei positiven kinematischen Schlupfanteilen entstehen können, werden dadurch zuverlässig vermieden.

Modul 10: Vorderachs-Querschlupfregelung

Die Querschlupfregelung reagiert auf ein übermäßiges Rutschen des kurveninneren Vorderrades. Sie dominiert hauptsächlich im fahrdynamischen Grenzbereich (kurveninnere Räder im instabilen Bereich) und verhindert dort Schwingungen und Fehlreaktionen der Antriebsschlupfregelung durch stark schwankende Raddrehzahlen.

a) Querschlupf:

$$SDF = sign(AST)*(VFL - VFR)/VFA *100 [\%]$$

Reifenschlupdifferenz quer (vorne innen - vorne außen):

$$SDF\_KC = SDF\_K - SDF$$

$$SDF\_K = f(AST) \qquad \text{kinematisch bedingter Querschlupf}$$

b) Sollwert:

$$SDFD = SDFD\_G + A\_SDF*VMS\_MIN$$

SDFD_G =
A_SDF =   geeignet gewählte Konstanten

Eine Lenkwinkelabhängigkeit des Sollwertes wird durch Manipulation von SDF_K eingebracht.

c) Regelabweichung:

$$CDS\_SDF = SDF\_KC - SDFD,$$

Modul 11: Bremsregelung

Ziel der Bremsregelung ist, die Schubregelung (Modul 9) bei leichten Bremsungen aufrechtzuerhalten, um ein einseitiges Überbremsen der Vorderachse durch Motorschub (relev. auf Mylow) zu verhindern. Ein Überbremsen der Hinterachse durch das Antriebssystem soll dabei jedoch unter allen Umständen vermieden werden.

a) Bildung einer Referenzdrehzahl:

Die Referenzdrehzahl VRA_REF wird ausgehend von der bei Bremsbeginn gemessenen HA-Drehzahl als mit konstanter Verzögerung abfallende Gerade berechnet.

b) Regelabweichung:

Die Regelabweichung CDS_BR wird nach folgender Formel berechnet:

$$CDS\_BR = (VRA - VRA\_REF + BR\_G)/BR\_G * 100 (\%)$$

BR_G =   geeignet gewählte Drehzahlschwelle

Sinkt die Hinterachsdrehzahl unter VRA - BR_G, ergibt sich eine negative Regelabweichung CDS_BR, wodurch in weiterer Folge ein absolutes Weichstellen der VM bewirkt wird.

Modul 12: Berechnung der Soll-Kolbengeschwindigkeit

In diesem Sofwareelement wird aus den in 2.6 bis 2.11 berechneten Regelabweichungen die gewünschte Stellkolbengeschwindigkeit SDP ermittelt. Dabei werden zwei Fälle unterschieden.

Erster Fall: $\qquad$ VW_MAX < 27 rpm (Stillstand des Fahrzeuges):
Wenn BR_ON = $\qquad$ ja (Bremse betätigt):

$$SDP = SDP\_FDC \text{ Schnellabregelung}$$

Wenn BR_ON = $\qquad$ nein (Bremse nicht betätigt):

$$CD = CDP \text{ result. Regelabweichung}$$

Sind alle Raddrehzahlen kleiner als der kleinste zuverlässig messbare Wert von 27 rpm, wird nur vorpositioniert bzw. bei Bremsung schnellabgeregelt, da alle drehzahlabhängigen Regelungselemente undefinierte Werte liefern.

Zweiter Fall: $\qquad$ VW_MAX > 27 rpm:
a) Anpassung der Reglergeschwindigkeit:
Abhängig vom Fahr- und Fahrbahnzustand ändert sich das Verhalten der Regelstrecke (z.B. nimmt die Steifigkeit des Reifens in Längsrichtung bei zunehmender Seitenkraft oder verringerter Radlast ab). Auch Drehzahlschwankungen z.B. durch unebene Fahrbahn oder Schwingungen im Antriebsstrang wirken sich unterschiedlich auf die Regelabweichungen aus. Diesem Umstand wird durch Multiplikation der einzelnen Regelabweichungen mit einem lenkwinkel- und geschwindigkeitsabhängigen Regelgeschwindigkeitsfaktor Rechnung getragen.

$$CDS\_CF = f(AST,VRA) \qquad \text{Regelgeschwindigkeitfaktor aus Tabelle}$$
$$CDS\_DRC = MAX(CDS\_DR, CDS\_SDF) * CDS\_CF$$

In CDS_DRC werden die Ergebnisse von Antriebsschlupfregelung und Querschlupfregelung bereits zusammengefaßt.

$$CDS\_COC = CDS\_CO * CDS\_CF$$
$$CDS\_BRC = CDS\_BR * CDS\_CF$$

b) Filterung der Regelabweichung:
Der Hauptanteil der für ein ruhiges Regelverhalten notwendigen Filterung wird nicht an den Eingangssignalen, sondern an den Regelabweichungen vorgenommen, da hier durch eine spezielle Logik in Hinblick auf eine Minimierung der Kolbenbewegung gefiltert werden kann. Dabei handelt es sich eigentlich nicht um einen Filter, sondern um eine drastische Reduktion störungsbedingter Regelabweichungen in Richtung Null (Stillstand des Stellkolbens).

Auf die Funktionsweise des Filters wird hier nicht eingegangen; die gefilterten Regelabweichungen werden im Folgenden mit dem Index _F gekennzeichnet:

c) Resultierende Regelabweichung:
Wenn Bremse betätigt $\qquad$ (BR_ON = ja):

$$CD = MIN(CDS\_BRC\_F, CDS\_COC\_F)$$

Bei Bremsbetätigung wird die Schubschlupfregelabweichung mit der Bremsregelabweichung begrenzt (negativer hoher Wert bei hoher Verzögerung der Hinterachse). Weitere Regelungselemente werden nicht verwendet.

Wenn Bremse nicht betätigt $\qquad$ (BR_ON = nein )

$$CD = MAX(CDS\_DRC\_F + FD*CDS\_CF, CDS\_COC\_F, CDP))$$

Die resultierende Regelabweichung für den normalen Fahrbetrieb wird als Maximum der Regelabweichungen von Antriebschlupfregelung plus reduziertem Dynamikfaktor, der Schubschlupfregelung und der Vorpositionierung gebildet.

d) Regelcharakteristik:
Aus der resultierenden Regelabweichung wird die gewünschte Kolbengeschwindigkeit aus einer gespeicherten Tabelle berechnet:

SDP = f (CD)

## 4. Ansteuerung der Kupplungshydraulik (Modul 13, 14)

In diesem Programmteil wird der notwendige elektrische Strom am Steuerventil der VM-Einheit zum Erreichen der gewünschten Kolbengeschwindigkeit berechnet und eingeregelt.

Modul 13: Berechnung des Ventilstromes

Dieser Modul beinhaltet den Algorithmus zur Berechnung des einzustellenden el. Stromes CCVD des Stromregelventils 24 zum Erreichen der von Modul 12 vorgegebenen Soll-Kolbengeschwindigkeit SDP.
Die Logik besteht aus einer Kolbensteuerung mittels der Kennlinie des Ventiles 24 sowie einem überlagerten PI-Regler, der Kennlinientoleranzen ausgleicht und das Ansprechverhalten verbessert.
Resultierender Ventilstrom:

CCVD = f(SDP) + CCVD_P + CCVD_I

f(SDP)              gespeicherte Ventilkennlinie
CCVD_P, CCVD_I    Zusatzstrom vom PI-Regler

Modul 14: Betätigung der Aktuatoren

In diesem Modul erfolgt die Ansteuerung der Aktuatoren der Kupplungshydraulik: Stromregelventil und Speicherladeventil.
Der von Modul 13 vorgegebene Ventilstrom wird mittels eines PID-Reglers am Stromregelventil eingestellt und durch Betätigung des Speicherladeventils der Hydraulikdruck zwischen 80 und 95 bar gehalten.

**Patentansprüche**

1. Verfahren zum Steuern einer Flüssigkeitsreibungskupplung eines Systemes für die Antriebskraftverteilung zwischen den Achsen eines allradangetriebenen Fahrzeuges durch Verstellen eines Stellkolbens der Flüssigkeitsreibungskupplung mittels eines ein Steuerventil enthaltenden Steuerkreises, ausgehend von fahrzustandsspezifischen Signalen, **gekennzeichnet durch** die folgenden Schritte:
a) Erfassung fahrzustandsspezifischer Signale und deren Verarbeitung zu den Eingangsgrößen, die für die folgenden Schritte immer zur Verfügung stehen: Raddrehzahlen (VFL;VFR,VRL,VRR), Lenkwinkel (AST), Motordrehzahl (SEN) und Motorleistungsstellorganstellung (ATR), gegebenenfalls auch Bremssignal (BR_ON) und Retourgangsignal (REV_ON), (Modul 1),
b) Verarbeitung dieser Eingangsgrößen zu Basisgrößen: Achsdrehzahlen (VFA),VRA)-,Achsdrehzahldifferenz (VDA), Zugkraft (FT), Schlupf zwischen Vorderachse und Hinterachse (VMS) und kinematisch korrigierter Schlupf (VMS_KC), (Modul 2 bis 5),
c) Ermittlung einzelner Regelabweichungen (CDS_DR, CDS_CO, CDS_SDF), aus den Eingangsgrößen und den Basisgrößen, (Modul 6 bis 11),
d) Berechnung einer Soll-Kolbengeschwindigkeit (SDP) aus den Regelabweichungen (CDS_DR, CDS_CO, CDS_SDF), (Modul 12)
e) Berechnung eines (elektrischen) Soll-Ventilstromes (CCVD) aus der Soll-Kolbengeschwindigkeit (SDP) anhand einer gespeicherten Ventilkennlinie (f(SDP)), (Modul 13),
f) Einstellung des Steuerventilstromes (CCV) mittels eines Reglers auf den Sollwert des Ventilstromes (CCVD), (Modul 14),

2. Verfahren nach Anspruch 1, **dadurch gekennzeichnet,** daß aus der Motorleistungsstellorganstellung (ATR) und der Motordrehzahl (SEN) in einem gespeicherten Kennfeld das Motormoment (TEN) und aus der Motordrehzahl (SEN) und der Vorderachsdrehzahl (VFA) die Übersetzung (MT), und dann aus dem Motormoment (TEN) und der Übersetzung (MT) die Zugkraft (FT) ermittelt wird, (Modul 3).

3. Verfahren nach Anspruch 2, **dadurch gekennzeichnet,** daß der Wert der Übersetzung (MT) zwischen zwei gewählten Grenzwerten (MT__MAX, MT__MIN) begrenzt wird, (Modul 3).

4. Verfahren nach Anspruch 3, **dadurch gekennzeichnet,** daß, wenn eine Achsdrehzahl (VFA, VRA) unter einem vorgegebenen Minimalwert (vorzugsweise rund 100 UPM) liegt, die Übersetzung gleich der maximalen Übersetzung(MT__MAX) angenommen wird, (Modul 3).

5. Verfahren nach Anspruch 4, **dadurch gekennzeichnet,** daß der obere Übersetzungsgrenzwert (MT__MAX) niedriger als die tatsächliche Übersetzung im niedrigsten Gang gewählt wird, (Modul 3).

6. Verfahren nach Anspruch 1, **dadurch gekennzeichnet,** daß als weitere Basisgröße ein Radfehler (VMSC__DT) in den folgenden Schritten ermittelt wird, (Modul 4):
   a) Beginn der Ermittlung des Radfehlers (VMSC__DT), wenn mindestens in einer Initialisierungszeit (TI__DT) folgende Bedingungen eingehalten wurden:
   - Schwankung von Schlupf (VMS), Zugkraft (FT), Motordrehzahl (SEN) und Lenkradwinkel (AST) innerhalb definierter Grenzwerte und
   - definierte Schwellen für Fahrgeschwindigkeit und/oder Kolbenposition (PVP) nicht unter- bzw. überschritten.
   b) zur Ermittlung des Radfehlers (VMSC-DT) wird ein Schlupfmittelwert (VMSC__DTM) durch Integration über eine bestimmte Wegstrecke gebildet.

7. Verfahren nach Anspruch 6, **dadurch gekennzeichnet,** daß der so gewonnene Schlupfmittelwert (VMSC__DTM) nur dann als Radfehler (VSMC__DT) angenommen wird, wenn er entweder bei einer Zugkraft (FT), die zwischen vorgegebenen Grenzwerten (FT__DTN, FT__DTP) liegt, ermittelt wurde, oder, wenn er bei einer Zugkraft (FT) außerhalb dieser Schranken gemessen wurde, nur, wenn er bei positiver Zugkraft (FT) kleiner als der aktuelle Radfehler (VMSC__DT) bzw. bei negativer Zugkraft (FT) größer als dieser ist, (Modul 4).

8. Verfahren nach Anspruch 6 oder 7, **dadurch gekennzeichnet,** daß der Radfehler (VMSC__DT) durch Mittelung gebildet wird, wobei die Mittelung darin besteht, daß die Änderungen der Meßwerte gegenüber dem aktuellen Reifenfehler zuerst über eine festgelegte Anzahl einzelner Meßwerte gemittelt werden und dann, nach Überschreiten dieser festgelegten Anzahl die Änderungen mit einem konstanten Faktor gewichtet wird, wobei die Zählung bei jedem Start des Fahrzeuges neu beginnt, (Modul 4).

9. Verfahren nach Anspruch 1 oder 6, **dadurch gekennzeichnet,** daß aus dem tatsächlichen Schlupf zwischen den Achsen (VMS) durch Abzug eines kinematisch bedingten Schlupfanteiles bei Kurvenfahrt (VMSC__ST) und gegebenenfalls eines Radfehlers (VMSC__DT) ein kinematisch korrigierter Schlupfwert (VMSC__KC) gewonnen wird, wobei der kinematisch bedingte Schlupfanteil (VMSC__ST) gespeicherten Kennfeldern als Funktion von Lenkwinkel (AST) und Fahrgeschwindigkeit (VRA) entnommen wird, (Modul 5).

10. Verfahren nach Anspruch 2, **dadurch gekennzeichnet,** daß aus dem zeitlichen Verlauf der Zugkraft (FT) ein Dynamikfaktor (FD) berechnet wird, der in den folgenden Verfahrensschritten wie eine Regelabweichung behandelt wird, (Modul 6 ).

11. Verfahren nach Anspruch 1, **dadurch gekennzeichnet,** daß Regelabweichungen (CDP1, CDP2) der Stellkolbenposition als Differenz aus dem mit einem Regelgeschwindigkeitsfaktor (K1,K2) multiplizierten Sollwert der Stellkolbenposition (PVP1, PVP2) und der aktuellen Stellkolbenposition (PVP) ermittelt werden, wobei die Sollwerte der Stellkolbenposition (PVP1, PVP2) in Abhängigkeit von Hinterachsdrehzahl (VRA), Lenkwinkel (AST) und Zugkraft (FT) gespeicherten Kennfeldern entnommen werden, und aus den Regelabweichungen (CDP1,CDP2) eine Maximumauswahl getroffen wird, (Modul 7).

12. Verfahren nach Anspruch 1, **dadurch gekennzeichnet,** daß die Antriebsschlupfregelabweichung (CDS__DR) in folgenden Schritten ermittelt wird:
   a) Ermittlung eines Antriebs-Schlupfsollwertes (VMSD__DR) aus der Zugkraft (FT) und einer fahrgeschwindigkeitsabhängigen Drehzahl (VRA, VFA)

b) Gewinnung einer Antriebsschlupfregelabweichung (CDS__DR) durch Minimumauswahl aus einerseits der Differenz aus dem kinematisch korrigierten Schlupf (VMS__KC) und dem Antriebsschlupfsollwert (VMSD__DR) und andererseits der Differenz aus dem Schlupf (VMS) und einem geeignet gewählten positiven Mindestschlupf (VMS__MIN), (Modul 8, Modul 5).

**13.** Verfahren nach Anspruch 1, **dadurch gekennzeichnet,** daß die Schubschlupfregelabweichung (CDS__CO) in folgenden Schritten ermittelt wird, (Modul 9):

a) Ermittlung eines Schub-Schlupfsollwertes (VMSD__CO) aus einer fahrgeschwindigkeitsabhängigen Drehzahl (VRA, VFA) und dem Lenkwinkel (AST)

b) Errechnen der Schlupfschubregelabweichung (CDS__CO) durch Minimumauswahl aus einerseits der Differenz aus dem Schub-Schlupfsollwert (VMSD__CO) und dem kinematisch korrigierten Schlupf (VMS__KC) und andererseits der Differenz aus einem negativen Mindestschlupf (VMS__MIN) und dem Schlupf (VMS).

**14.** Verfahren nach Anspruch 1, **dadurch gekennzeichnet,** daß die Vorderachs-Querschlupfregelabweichung (CDS-SDF) in folgenden Schritten gewonnen wird (Modul 10):

a) Ermittlung des Schlupfes zwischen linkem und rechtem Vorderrad (SDF)

b) Ermittlung des kinematisch korrigierten Querschlupfes (SDF__KC) als Differenz aus dem einer gespeicherten Kurve in Abhängigkeit vom Lenkwinkel (AST) entnommenen kinematisch bedingtem Querschlupf (SDF__K) und dem Querschlupf (SDF),

c) Ermittlung des Querschlupf-Sollwertes (SDFD) aus einer fahrgeschwindigkeitsabhängigen Drehzahl (VFA, VRA),

d) Ermittlung der Vorderachs-Querschlupfregelabweichung (CDS__SDF) als Differenz aus dem kinematisch korrigiertem Querschlupf (SDF__KC) und dem Querschlupf-Sollwert (SDFD).

**15.** Verfahren nach Anspruch 1, **dadurch gekennzeichnet,** daß eine Bremsregelabweichung (CDS__BR) in folgenden Schritten ermittelt wird, (Modul 11):

a) Bildung einer Referenzdrehzahl (VRA__REF) als mit geeignet gewählter konstanter Verzögerung (VRA__DLI) von der bei Bremsbeginn gemessenen Hinterachsdrehzahl (VRA) abfallende Drehzahl,

b) Ermittlung der Bremsregelabweichung (CDS__BR) aus Hinterachsdrehzahl (VRA) und Referenzdrehzahl (VRA__REF).

**16.** Verfahren nach Anspruch 1, **dadurch gekennzeichnet,** daß aus den einzelnen Regelabweichungen die Soll-Kolbengeschwindigkeit (SDP) in folgenden Schritten berechnet wird, (Modul 12):

a) Ermittlung der resultierenden Regelabweichung (CD) durch Maximumauswahl aus Termen, die aus einer Regelabweichung (CDS__SDF, CDS__DR,CDS__CO,CDP1,CDP2,CDP) oder analogen Größe (FD) multipliziert mit einem Regelgeschwindigkeitsfaktor (CDS__CF) durch Zusammenfassen gebildet sind,

b) Berechnung der Soll-Kolbengeschwindigkeit (SDP) aus der resultierenden Regelabweichung (CD) nach einer geeignet gewählten Funktion.

**17.** Verfahren nach Anspruch 16, **dadurch gekennzeichnet,** daß die Ermittlung der resultierenden Regelabweichung (CD) durch Minimumauswahl aus (CDS__BR) oder (CDS__CO), jeweils multipliziert mit einem Regelgeschwindigkeitsfaktor (CDS__CF) erfolgt, wenn die Bremsen betätigt sind, (Modul 12).

**18.** Verfahren nach Anspruch 16, **dadurch gekennzeichnet,** daß die Regelabweichungen (CDS__DR, CDS__CO, CDS__SDF, CDS__BR) einzeln gefiltert werden und dann daraus die resultierende Regelabweichung (CD) gebildet wird, (Modul 12).

**19.** Flüssigkeitsreibungskupplungssystem für die Drehmomentverteilung zwischen den Achsen eines allradgetriebenen Fahrzeuges, das aus einer Flüssigkeitsreibungskupplung (11) mit verstellbaren Lamellenabständen und einem Steuergerät (30) besteht, wobei die Flüssigkeitsreibungskupplung (11) einen durch einen hydraulischen Steuerkreis (20,21,22,23,24,25) betätigten Steuerkolben (13) aufweist und das Steuergerät (30) in Wirkverbindung mit mindestens einem Ventil (24) im Steuerkreis steht, **dadurch gekennzeichnet,** daß das Steuergerät (30) über Mittel zur Berechnung einer Sollgeschwindigkeit (SDP) des Steuerkolbens aus fahrzustandsspezifischen Signalen verfügt und daß das Steuerventil ein Proportionalventil ist, das direkt die Geschwindigkeit des Steuerkolbens (SP) auf die Sollgeschwindigkeit (SDP) einstellt.

**20.** Verwendung des Verfahrens nach einem der Ansprüche 1 bis 19 für ein Flüssigkeitsreibungskupplungssystem, bei dem als Steuergerät ein Mikrorechner vorgesehen ist, in dessen Speicher die Befehle zur Ausführung der Verfahrensschritte enthalten sind.

**Claims**

**1.** Process for the control of a viscous shear coupling of a system for the distribution of driving power among the axles of an all-wheel driven vehicle by shifting a control piston of the viscous shear coupling by means of a control circuit comprising a control valve based on signals that are specific to driving conditions, **characterized** by the following steps:

a) Acquisition of signals specific to driving conditions and their conversion into put parameters to be available for the following steps: Rotational wheel speeds (VFL;VFR, VRL,VRR), steering angle (AST), rotational engine speed (SEN) and setting of engine performance setting element (ATR), if necessary also brake signal (BR__ON) and reverse signal (REV__ON) (module 1),

b) Conversion of these input parameters into basis parameters: Rotational axle speeds (VFA), VRA), axle speed difference (VDA), tractive force (FT), slip between front axle and rear axle (VMS) and kinematically corrected slip (VMS__KC), modules 2 to 5).

c) Ascertainment of individual control deviations (CDS__DR, CDS__CO, CDS__SDF) from the input parameters and the basis parameters (modules 6 to 11).

d) Calculation of a desired piston speed (SDP) from the control deviations (CDS__DR, CDS__CO, CDS__SDF) (module 12).

e) Calculation of an (electric) desired valve current (CCVD) from the desired piston speed (SPD) by using a stored characteristic valve curve (f(SDP)), (module 13),

f) Adjustment of the control valve current (CCV) by means of an adjuster to the desired value of the valve current (CCVD) (module 14).

**2.** Process as in claim 1, **characterized** in that engine torque (TEN) is calculated in a stored characteristics diagram from the position of the engine performance setting element (ATR) and the rotational speed of the engine (SEN), the engine transmission (MT) is calculated from the rotational engine speed (SEN) and the front axle speed (VFA) and the tractive force (FT) is then calculated from the engine torque (TEN) and the transmission (MT) (module 3).

**3.** Process as in claim 3, **characterized** in that the value of the transmission (MT) is limited between two selected limit values (MT__MAX, MT__MIN) (module 3).

**4.** Process as in claim 3, **characterized** in that the transmission is assumed to be equal to maximum transmission (MT__MAX) if a rotational axle speed (VFA, VRA) is lower than a predetermined minimum value (preferably around 100 rpm) (module 3).

**5.** Process as in claim 4, **characterized** in that the upper limit value of transmission ratio (MT__MAX) is selected so as to be lower tha the actual transmission ratio in the lowest gear (module 3).

**6.** Process as in claim 1, **characterized** in that a wheel default (VMSC__DT) is ascertained in the following steps as an additional basic value (module 4):

a) Start of detection of the wheel defect (VMSC__DT) when at least the following conditions were met during an initialization time (TI__DT):
- Fluctuation of slip (VMS), tractive force (FT), rotational engine speed (SEN) and steering angle (AST) within defined limit values and
- defined threshold for travel speed and/or piston position (PVP) is neither fallen short of nor exceeded

b) To detect the wheel dafault (VMSC__DT) a mean slip value (VMSC__DTM) is formed by integration over a given distance.

**7.** Process as in claim 6, **characterized** in that the mean slippage value (VMSC__DTM) thus obtained is accepted as a wheel default (VMSC__DT) only if it was either detected with a tractive force (FT) lying between the limit values (FT__DTN, FT__DTP) or, in case that it was measured with a tractive force (FT) outside these limits, only if it is smaller than the actual wheel defect (VMSC__DT) in case of

16

EP 0 538 504 B1

positive tractive force (FT) or greater than the actual wheel defect (VMSC__DT) in case of negative tractive force (FT) (module 4).

8. Process as in claim 6 or 7, **characterized** in that the wheel default (VMSC__DT) is formed by averaging, this being accomplished by first averaging the changes in the measured values as compared with the actual tire defect over a predetermined number of individual measured values and then, when this predetermined number has been exceeded, by weighting the changes with a constant factor, whereby the counting is started anew with each vehicle start (module 4).

9. Process as in claim 1 or 6, **characterized** in that a kinematically corrected slip value (VMSC-KC) is obtained from the actual slip between the axles (VMS) by subtracting a kinematically caused slip part in turns (VMSC__ST) and if applicable a wheel defect (VMSC-DT), whereby the kinematically caused slip part (VMSC__ST) is taken from stored characteristics as a function of steering angle (AST) and travel speed (VRA) (module 5).

10. Process as in claim 2, **characterized** in that a dynamic factor (FD) is calculated from the evolution of tractive force (FT) in time, said dynamic factor (FD) being treated as a control deviation in the subsequent process steps.

11. Process as in claim 1, **characterized** in that control deviations (CDP1, CDP2) of the adjusting piston position are calculated as being the difference between the desired value of the adjusting piston position (PVP1, PVP2) multiplied by an adjusting speed factor (K1, K2) and the actual adjusting piston position (PVP) whereby the desired values of the adjusting piston position (PVP1, PVP2) are obtained from stored characteristics in function of rear axle speed (VRA), steering angle (AST) and tractive force (FT) and a maximum selection is made from the control deviations (CDP1, CDP2) (module 7).

12. Process as in claim 1, **characterized** in that the drive slip control deviation (CDS__DR) is determined through the following steps:
    a. Calculation of a desired drive slip value (VMSD__DR) from the tractive force (FT) and from a rotational speed (VRA, VFA) dependent upon travel speed
    b. Obtention of a drive slip control deviation (CDS__DR) by minimum selection from the difference between kinematically corrected slip (VMS__KC) and the desired drive slip value (VMSD__DR) on the one hand and on the other hand from the difference between slip (SMS) and a suitably selected positive minimum slip (VMS__MIN) (module 8, module 5).

13. Process as in claim 1, **characterized** in that the thrust slip control deviation (CDS__CO) is calculated through the following steps (module 9):
    a. Calculation of a desired thrust slip value (VMSD__CO) from a rotational speed dependent upon travel speed (VRA, VFA) and from the steering angle (AST)
    b. Calculation of the thrust slip control deviation (CDS__CO) through minimum selection of the difference between the desired thrust slip value (VMSD__CO) on the one hand and the kinematically corrected slip (VMS__KC) on the one hand of the difference between a negative minimum slip (VMS__MIN) and the slip (VMS).

14. Process as in claim 1, **characterized** in that transversal deviation of front axle slip (SCD-SDF) is obtained through the following steps (module 10):
    a. Calculation of slip between left and right front wheel (SDF)
    b. Calculation of the kinematically corrected transversal slip (SDF__KC) as a difference between a kinematically caused transversal slip (SDF__K) taken from a stored curve in function of steering angle and the transversal slip (SDF).
    c. Calculation of the desired transversal slip value (SDFD) from a rotational speed dependent upon travel speed (VFA, VRA)
    d. Determination of the transversal front-axle slip control deviation (CDS__SDF) as a difference between the kinematically corrected transversal slip (SDF__KC) and the desired transversal slip value (SDFD).

15. Process as in claim 1, **characterized** in that a braking control deviation (CDS-BR) is calculated through the following steps (module 11):

17

EP 0 538 504 B1

a. A rotational reference speed (VRA__REF) is formed as a rotational speed which decreases with suitably selected constant deceleration (VRA__DLI) from the rear axle speed (VRA) measured at the beginning of braking,
b. the braking control deviation (CDS__BR) is calculated from the rotational rear axle speed (VRA) and the rotational reference speed (VRA__REF).

16. Process as in claim 1, **characterized** in that the desired piston speed (SDP) is calculated from the individual control deviations in the following steps (module 12):
a. Calculations of the resulting control deviation (CD) through minimum selection from terms formed by compilation from a control deviation (CDS__SFD, CDS__DR, CDS__CO, CDP1, CDP2, CDP) or analog parameter (FD) multiplied by a control speed factor (CDS-CF).
b. Calculation of the desired piston speed (SDP) from the resulting control deviation (CD) according to a suitably selected function.

17. Process as in claim 16, **characterized** in that the determination of the resulting control deviation (CD) by minimum selection from (CDS__BR) or (CDS__CO), each multiplied by a control speed factor (CDS__CF) is effected when the brakes are actuated (module 12).

18. Process as in claim 16, **characterized** in that the control deviations (CDS__DR, CDS__CO, CDS__SDF, CDS__BR) are filtered individually and in that the resulting control deviation is then formed therefrom (module 12).

19. Viscous shear coupling system for the distribution of torque among the axles of an all-wheel driven vehicle consisting of a viscous shear coupling (11) with adjustable distances between disks and of a control device (30), whereby the viscous shear coupling (11) is equipped with a control piston (13) and the control device (30) is actively connected to at least one valve (24) in the control circuit, **characterized** in that the control device (30) is equipped with means for the calculation of a desired speed (SDP) of the adjusting piston from travel condition specific signals and in that the control valve is a proportional valve which sets the speed (SP) of the control piston to the desired speed (SDP).

20. Viscous shear coupling system as in claim 1, **characterized** in that the control device is a microcomputer with a memory containing the commands to carry out the process according to claims 1 to 19.

## Revendications

1. Procédé de commande du visco-coupleur d'un system de distribution de la force motrice parmi les essieux d'un véhicule à toutes roues motrices par commande d'un piston de commande du visco-coupleur par moyen d'un circuit de commande comportant une vanne-pilote, à partir de signaux spécifiques de l'état de marche, **caractérisé** par les pas suivants:
a) Saisie des signaux spécifiques de l'état de marche et leur traitement pour obtenir des valeurs d'entrée disponibles à tout instant pour les pas ultérieurs: nombre de tours des roues (VFL;VFR,VRL,VRR), angle de direction (AST), nombre de tours du moteur (SEN) et position de l'organe d'ajustement de la puissance du moteur (ATR), le cas échéant aussi un signal d'état des freins (BR__ON) et un signal de marche arrière (REV__ON) (Module 1),
b) Calcul des valeurs de base à partir de ces valeurs d'entrée: nombre de tours des essieux (VFA, VRA), différence de nombre de tours des essieux (VDA), force motrice (FT), glissement entre essieu avant et essieu arrière (VMS) et glissement cinématiquement corrigé (VMS__KC) (Modules 2 à 5),
c) Calcul des déviations de régulation individûelles (CDS__DR, CDS__CO, CDS__SDF) à partir des valeurs d'entrée et des valeurs de base (Module 6 à 11),
d) Calcul d'une vitesse de piston de consigne (SDP) à partir des déviations de régulation (CDS__DR, CDS__CO, CDS__SDF) (Module 12),
e) Calcul d'un courant de vanne-pilote (électrique) de consigne (CCVD) à partir de la vitesse du piston de consigne (SDP) à l'aide d'une courbe caractéristique (f(SDP)) de la vanne-pilote mémorisée dans la mémoire (Module 13),
f) Ajustement d'un courant de vanne-pilote (CCV) à partir de la valeur de consigne (CCVD) du courant de vanne-pilote à l'aide d'un régulateur (Module 14).

18

2. Procédé selon la revendication 3, **caractérisé** en ce que le couple du moteur (TEN) est calculé dans un champ caractéristique du moteur mémorisé à partir de la position de l'organe d'ajustement de la puissance du moteur (ATR) et du nombre de tours du moteur (SEN), le taux de transsupposésion de la boite de vitesses (MT) est calculé à partir du nombre de tours du moteur (SEN) et du nombre de tours de l'essieu avant (VFA), et ensuite la force motrice (FT) est calculée à partir du couple du moteur (TEN) et du taux de transsupposésion de la boite de vitesses (MT) (Module 3).

3. Procédé selon la revendication 2, **caractérisé** en ce que la valeur du taux de transsupposésion de la boite de vitesses (MT) est limitée entre deux limites (MT__MAX, MT__MIN) (Module 3).

4. Procédé selon la revendication 3, **caractérisé** en ce que le taux de transsupposésion est supposé égal au taux de transmission maximum (MT__MAX) quand le nombre de tours d'un essieu (VFA, VRA) est inférieur à une valeur minimale prédeterminée (de préférence de 100 tours par minute environ) (Module 3).

5. Procédé selon la revendication 4, **caractérisé** en ce que la valeur limite supérieure du taux de transmission (MT__MAX) est choisie inférieure au taux de transmission effectif dans la vitesse de la boite de vitesses la plus inférieure (Module 3).

6. Procédé selon la revendication 1, **caractérisé** en ce qu'une déviation de diamètre de roue (VMSC__DT) est encore calculée comme valeur de base par les pas suivants (Module 4):
   a) Départ du calcul de la déviation de roue (VMSC__DT) quand dans un temps d'initialisation (TI__DT) les conditions suivantes sont remplies:
      - Variation de glissement (VMS), force motrice (FT), nombre de tours du moteur (SEN) et angle de direction (AST) entre des limites definies et
      - Vitesse de marche et/ou position du piston (PVP) entre des limites definies.
   b) Aux fins de calculer la déviation de roue (VMSC__DT), une moyenne de glissement (VMSC__DTM) est calculée par intégration pendant une certaine distance.

7. Procédé selon la revendication 6, **caractérisé** en ce que la moyenne de glissement (VMSC__DTM) ainsi calculée n'est acceptée comme déviation de roue (VSMC__DT) que, oubien, quand elle était déterminée avec une force motrice (FT) située entre des limites (FT__DTN, FT__DTP) prédeterminées, oubien, si elle était déterminée quand la force motrice (FT) était en déhors de ces limites prédéterminées, seulement quand elle est inférieure à la déviation de roue (VMSC__DT) si la force motrice (FT) est positive, et quand elle est supérieure à la déviation de roue (VMSC__DT) si la force motrice (FT) est negative (Module 4).

8. Procédé selon l'une des revendications 6 ou 7, **caractérisé** en ce que la déviation de roue (VMSC__DT) est établie par calcul de la moyenne, le calcul de la moyenne consistant en ce que une moyenne des variations des valeurs mésurées en regard de la déviation actuelle est d'abord calculée pour un nombre prédéterminé de valeurs individûelles et puis, quand ce nombre prédéterminé est surmonté, les variations sont pondérées avec un facteur constant, le compteur étant remis à zéro à chaque demarrage du véhicule (Module 4).

9. Procédé selon la revendication 3, **caractérisé** en ce que un glissement cinématiquement corrigé (VMSC__KC) est calculé à partir du glissement effectif entre les essieux (VMS) par soustraction de la portion du glissement dûe à des rélations cinématiques dans un virage (VMSC__ST) et, le cas échéant, d'une déviation de roue (VMSC__DT), le glissement cinématiquement corrigé (VMSC__ST) étant fourni par un champ caractéristique en fonction de l'angle de direction (AST) et de la vitesse de marche (VRA) (Module 5).

10. Procédé selon la revendication 2, **caractérisé** en ce que un facteur dynamique (FD) est calculé à partir du développement dans le temps de la force motrice (FT), ce facteur dynamique (FD) étant traité en tant que déviation de régulation dans les pas ultérieurs du procédé (Module 6).

11. Procédé selon la revendication 1, **caractérisé** en ce que des déviations de régulation de la position du piston (CDP1, CDP2) sont calculées en tant que différences entre une valeur de consigne de la position du piston (PVP1, PVP2) multipliée avec un facteur de vitesse de régulation (K1,K2) et la position actuelle du piston (PVP), les valeurs de consignes de la position du piston (PVP1, PVP2) étant fournis par des champs caractéristiques mémorisés en fonction du nombre de tours de l'essieu arrière (VRA), de l'angle de direction (AST) et de la force motrice (FT), et en ce que le maximum est choisi parmi les déviations de régulation (CDP1,CDP2) (Module 7).

**12.** Procédé selon la revendication 1, **caractérisé** en ce que la déviation du glissement de traction (CDS__DR) est calculée dans les pas suivants:

a) Calcul d'une valeur de consigne du glissement de traction (VMSD__DR) à partir de la force motrice (FT) et d'un nombre de tours qui dépend de la vitesse de marche (VRA, VFA);

b) Calcul d'une déviation du glissement de traction (CDS__DR) par sélection du minum parmi, d'un coté la différence entre le glissement cinématiquement corrigé (VMS__KC) et la valeur de consigne du glissement de traction (VMSD__DR), et de l'autre coté la différence entre le glissement (VMS) et un glissement minimal positif (VMS__MIN) choisi de manière appropriée (Module 8, Module 5).

**13.** Procédé selon la revendication 1, **caractérisé** en ce que la déviation de régulation du glissement de poussée (CDS__CO) est calculée par les pas suivants (Module 9):

a) Calcul d'une valeur de consigne du glissement de poussée (VMSD__CO) à partir d'un nombre de tours qui dépend de la vitesse de marche (VRA, VFA) et de l'angle de direction (AST);

b) Calcul de la déviation du glissement de poussée (CDS__CO) par sélection du minimum parmi, de l'un coté la différence entre la valeur de consigne du glissement de poussée (VMSD__CO) et le glissement cinémaitiquement corrigé (VMS__KC), et de l'autre coté la différence entre un glissement négatif minimal (VMS__MIN) et le glissement (VMS).

**14.** Procédé selon la revendication 1, **caractérisé** en ce que la déviation de régulation du glissement transversal de l'essieu avant (CDS__SDF) est calculée par les pas suivants (Module 10):

a) Détermination du glissement entre les roues avants gauche et droit (SDF);

b) Détermination d'un glissement transversal cinématiquement corrigé (SDF__KC) en tant que différence entre un glissement transversal cinématique (SDF__K) à partir d'une courbe mémorisée en fonction de l'angle de direction (AST) et du glissement transversal (SDF);

c) Détermination d'une valeur de consigne du glissement transversal (SDFD) à partir d'un nombre de tours qui dépend de la vitesse de marche (VFA, VRA);

d) Détermination d'une déviation du glissement transversal de l'essieu avant (CDS__SDF) en tant que différence entre le glissement transversal cinématiquement corrigé (SDF__KC) et la valeur de consigne du glissement transversal (SDFD).

**15.** Procédé selon la revendication 1, **caractérisé** en ce que une déviation de régulation de freinage (CDS__BR) est calculée dans les pas suivants (Module 11):

a) Détermination d'un nombre de tours de référence (VRA__REF) en tant que nombre de tours diminuant avec une décélération constante choisie (VRA__DLI) à partir du nombre de tours de l'essieu arrière (VRA) mésuré au commencement du freinage,

b) Détermination de la déviation de régulation de freinage (CDS__BR) à partir du nombre de tours de l'essieu arrière (VRA) et d'un nombre de tours de référence (VRA__REF).

**16.** Procédé selon la revendication 1, **caractérisé** en ce que la vitesse de consigne du piston (SDP) est calculée à partir des déviations de régulation individûelles dans les pas suivants (Module 12):

a) Détermination de la déviation de régulation résultante (CD) par sélection du maximum parmi les termes formés par groupement des déviations de régulation (CDS__SDF, CDS__DR, CDS__CO, CDP1, CDP2, CDP) ou grandeurs analogues (FD), multipliées chacune avec un facteur de vitesse de régulation (CDS__CF),

b) Calculation de la vitesse de piston de consigne (SDP) à partir de la déviation de régulation résultante (CD) suivant une fonction choisie appropriée.

**17.** Procédé selon la revendication 16, **caractérisé** en ce que la détermination de la déviation de régulation résultante (CD) est effectuée par sélection du minimum parmi (CDS__BR) ou (CDS__CO), chacune multipliée avec un facteur de vitesse de régulation (CDS__CF) quand les freins sont en action (Module 12).

**18.** Procédé selon la revendication 16, **caractérisé** en ce que les déviations de régulation (CDS__DR CDS__CO, CDS__SDF, CDS__BR) sont individûellement filtrées avant d'être utilisées pour déterminer la déviation de régulation résultante (CD) (Module 12).

**19.** Système de visco-coupleur déstiné à la distribution du couple entre les essieux d'un véhicule à toutes roues motrices consistant en un visco-coupleur (11) dans lequel la distance entre les disques est règlable et un dispositif de commande (30), le visco-coupleur (11) comportant un piston de commande (13) opéré par un circuit de commande hydraulique (20,21,22,23,24,25) et le dispositif de commande (30) étant en liaison avec au moins une soupape (24) du circuit de commande, caractérisé en ce que le dispositif de commande (30) est pourvu de moyens pour calculer une vitesse de consigne du piston de commande (SDP) à partir de signaux représentatifs de l'état de marche et en ce que la soupape est une valve-pilote proportionelle ajustant directement la vitesse du piston de commande à la vitesse de consigne.

**20.** Emploi du système de visco-coupleur selon l'une des revendications 1 à 19 dont le dispositif de commande est un microordinateur dont la mémoire contient les ordres pour l'éxécution des pas du procédé.

FIG. 1

EP 0 538 504 B1

FIG. 2

23

# Arbeitsspeicher · Rechenprogramm · Sensoren

| Arbeitsspeicher | Rechenprogramm | Sensoren |

**Arbeitsspeicher**

VFL,VFR,VRL,
VRR,SEN,ATR,
AST,PVP,PHY,
VSU,CCV,BR_ON,
REV_ON

VFA,VRA,VDA,
VW_MIN

FT

VMSC_DT

**Rechenprogramm**

Signalerfassung und
–verarbeitung, aut.
Sensorkalibrierung,
Signalfilterung ①

VFL,VFR
VRL,VRR

Berechnung von Drehzahlgroessen,Filterung

$VFA=(VFL+VFR)/2$
$VRA=(VRL+VRR)/2$
$VDA=VFA-VRA$
$VW\_MAX=MAX(VFL,VFR,VRL,VRR)$ ②

③

ATR,SEN,VFA

Zugkraftberechnung

$FT=TEN*SEN/VFA$

ATR,SEN

TEN

FT,SEN,VW_MIN
AST,PVP,VMS,BR_ON

Reifenfehlererkennung ④

Modul

**Sensoren**

Sensorsignale

Bosch ABS
Bosch Motronic
Lenkwinkel
Kolbenweg, Ventilstrom
Hydraulikdruck
Retourgangschalter
Bremslichtschalter
Versorgungsspannung

TEN — ATR=konst. — SEN

FIG. 3A

EP 0 538 504 B1

VMS,VMS_MIN,
VMS_KC

FD

CDP

CDS_DR

VRA,VDA,VMSC_DT
AST,REV_ON

**Berechnung von Schlupf-groessen**

$VMS=(VDA/VRA)*100[\%]$
$VMS\_MIN=(VDA\_MIN/VRA)*100[\%]$
$VMS\_KC=VMS-VMSC\_DT-VMSC\_ST$

⑤

VRA,AST
REV_ON

VMSC_ST

VMSC_ST          vorwaerts
$|AST|=$konst.
VRA

VMSC_ST          retour
VRA

FT

**Dyn. Zugkraftsteuerung**

$FD=\left(\dfrac{FT-FT(t-IFD)}{KFD}\right)^2$

⑥

PVP1
$|AST|< 20\%$
$|AST|> 80\%$
VRA

PVP,VRA
AST,FT

**Vorpositionierung**

$CDP1=(PVP1-PVP)*K1$
$CDP2=(PVP2-PVP)*K2$
$CDP=MAX(CDP1;CDP2)$

⑦

VRA,AST
FT

PVP1
PVP2

PVP2
FT

VMS,VMS_KC
FT,VMS_MIN

**Antriebsschlupfregelung**

$CDS\_DR=MIN(VMS\_KC-VMSD\_DR;$
$VMS\_VMS\_MIN)$

⑧

FT,VMS_MIN

VMSD_DR

VMSD_DR
$FT<=0$
VRA

VMSD_DR

FIG. 3B

EP 0 538 504 B1

CDS_CO

VMS,VMS_KC, VRA,AST, VMS_MIN

Schubschlupfregelung

CDS_CO=MIN(VMS_KC−VMSD_CO; VMS−A_CO*VMS_MIN)

(9)

VMS_MIN,AST, VRA

VMSD_CO

$$|AST|=konst.$$

VMSD_CO

VRA

CDS_SDF

VFL,VFR,VFA, VMS_MIN,AST

Vorderachs−Querschlupf−regelung

$$SDF=sign(AST)*\frac{VFL-VFR}{VFA}*100\%$$

SDF_KC=SDF_K−SDF

CDS_SDF=SDF_KC−SDFD

(10)

AST,VMS_MIN

SDF_K,SDFD

SDF_K

SDFD

|AST|

VRA

CDS_BR

VRA,BR_ON

Bremsregelung

$$CDS\_BR=\frac{VRA+BR\_G-VRA\_REF}{BR\_G}*100[\%]$$

(11)

VRA

VRA_REF

VRA_REF VRA

BR_ON

VRA_REF

VRA

t

FIG. 3C

**Berechnung der Soll-Kolben-geschwindigkeit** ⑫

VW_MAX=0:

BR_ON=ja: CD=CD_FD
BR_ON=nein: CD=CDP

VW_MAX>0:

Anpassung Reglerge-schwindigkeit

CDS_DRC=MAX(CDS_DR,CDS_SDF)*CDS_CF
CDS_COC=CDS_CO*CDS_CF
CDS_BRC=CDS_BR*CDS_CF

CDS-Filterung

CDS_DRC_F=f(CDS_DRC)
CDS_COC_F=f(CDS_COC)

Resultierende CD

BR_ON=ja: CD=MIN(CDS_BRC, CDS_COC_F)
BR_ON=nein: CD=MAX(CDS_DRC_F +FD*CDS_CF; CDS_COC_F;CDP)

Regelcharakteristik
SDP=f(CD)

SPD

VRA,VW_MAX, AST,BR_ON,FD, CDP,CDS_DR, CDS_CO, CDS_SDF, CDS_BR

VRA,AST
CDS_CF

CDS_CF   AST<20   AST>80   VRA

CD
SPD

FIG. 3D

EP 0 538 504 B1

EP 0 538 504 B1

CCVD

SPD,PVP
PHY

⑬

Berechnung des Ventilstromes

CCVD=f(SPD)+CCVD_P+CCVP_I
CCVD_P+CCVD_I=f(SP,SPD,t)
(PI-Regler)

SPD

f(SPD)

f(SPD)

SPD

⑭

CCVD,CCV
PHY,SEN

Ansteuerung VM-Hydraulik

CCV
ACV_ON

Aktuatoren

Stromregelventil
Speicherladeventil

FIG. 3E